# EUROPEAN PATENT SPECIFICATION

(11) **EP 4 135 303 B1**
(45) Date of publication and mention of the grant of the patent: **02.04.2025**
(21) Application number: 22785673.9
(22) Date of filing: 21.04.2022
(51) Int. Cl.: H04M 1/72403, H04M 1/72412, H04W 8/20, H04W 8/18, H04W 60/04, H04W 88/06, H04W 88/04

(54) **METHOD FOR PREVENTING MISSED CALLS, SYSTEM, ELECTRONIC DEVICE, AND STORAGE MEDIUM**
VERFAHREN ZUR VERHINDERUNG VERPASSTER ANRUFE, SYSTEM, ELEKTRONISCHE VORRICHTUNG UND SPEICHERMEDIUM
PROCÉDÉ DE PRÉVENTION D'APPELS MANQUÉS, SYSTÈME, DISPOSITIF ÉLECTRONIQUE ET SUPPORT DE STOCKAGE

(30) Priority: 15.11.2021 CN 202111350365; 30.06.2021 CN 202110733978
(43) Date of publication of application: 15.02.2023
(73) Proprietor: Honor Device Co., Ltd., Shenzhen, Guangdong 518040 (CN)
(72) Inventor: ZHANG, Xin, Shenzhen, Guangdong 518040 (CN); REN, Zhanmin, Shenzhen, Guangdong 518040 (CN)
(74) Representative: Isarpatent
(86) International application number: PCT/CN2022/088221
(87) International publication number: WO 2023/273540

(56) References cited:
- WO-A1-2015/180140
- CN-A- 102 045 890
- CN-A- 105 898 073
- CN-A- 106 332 319
- CN-A- 107 426 426
- CN-A- 110 856 163
- CN-A- 114 189 846
- US-A1- 2016 182 145
- US-A1- 2020 245 292
- US-A1- 2020 367 048

## Description

### TECHNICAL FIELD

This application relates to the field of communication technologies, and in particular, to a method for avoiding missing a call, an electronic device, and a computer readable storage medium.

### BACKGROUND

Currently, more than 99% of the dual-network dual-standby mobile phones in the mobile phone market support "single-pass", which means that dual cards may be standby at the same time, but cannot be used for calling at the same time. That is, when a card A of the mobile phone makes a call, a card B of the mobile phone is turned off, causing the card B of the mobile phone to miss incoming calls and short messages; similarly, when the card B of the mobile phone makes a call, the card A of the mobile phone is turned off, causing the card A of the mobile phone to miss incoming calls and short messages.

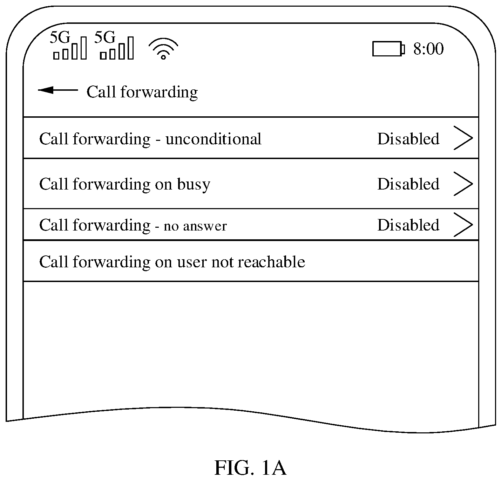

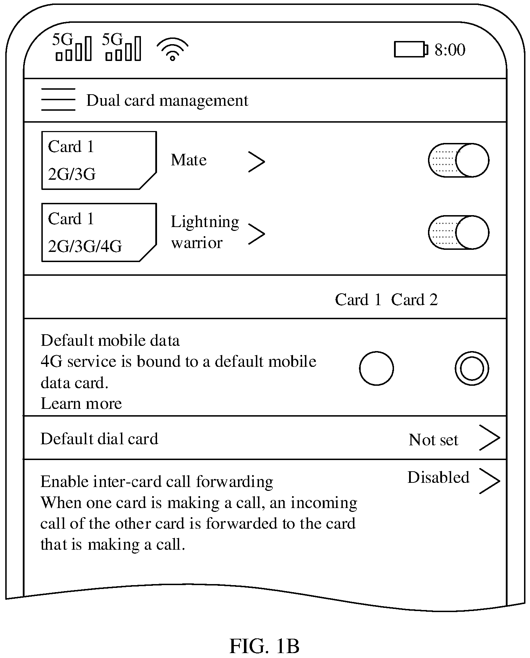

In addition, hardware of an existing mobile phone supports dual-pass. By modifying a hardware antenna and radio frequency, the mobile phone supports the 2T2R (that is, two uplink channels and two downlink channels), and the dual cards of the mobile phone can send and receive data at the same time, for example, Huawei Mate8 mobile phones, Huawei P9 mobile phones, and Honor V8 mobile phones. In the conventional technology, by setting "call forwarding - no answer" (refer to a call forwarding interface in FIG. 1A and a dual-card management interface in FIG. 1B), in a no-answer scenario, a call of the card A is forwarded to the card B. However, in the conventional technology, when the card B of the mobile phone makes a call, the card A of the mobile phone is turned off, and consequently, the card A of the mobile phone misses incoming calls and short messages.

WO 2015/180140 A1 discloses an apparatus to support subscriber identity modules in a wireless accessory device.

US 2020/245292 A1 discloses a terminal supporting dual receive single transmit dual card dual standby single pass DR-DSDS which includes a first SIM card interface and a second SIM card interface.

US 2020/367048 A1 discloses a method which includes receiving, by a sink device and from a source device, identity information corresponding to a subscriber information module (SIM) of the source device via a connection between the sink device and the source device; registering, at the sink device, a remote SIM with the identity information corresponding to the SIM of the source device; and communicating, by an application of the sink device and using the remote SIM, with an external device via a cellular radio transceiver of the source device.

### SUMMARY

This application provides a method for avoiding missing a call, an electronic device, and a computer readable storage medium, as defined in the appended set of claims, to resolve a technical problem of missing calls and short messages.

According to a first aspect, as defined in claim 1, this application provides a method for avoiding missing a call, where the method is carried out in an auxiliary apparatus, and the method includes:
receiving a network registration instruction sent by a host apparatus, where the host apparatus sends the network registration instruction when being connected to a network by using a first SIM card of the host apparatus; registering, in response to the network registration instruction, with the network by using a modem of an idle SIM card slot on the auxiliary apparatus, wherein the idle SIM card slot is in one of the following states: no SIM card is inserted, only one SIM card is inserted on a dual-card device, and a SIM card is inserted but the SIM card is in a disabled state; receiving second incoming call information that is sent by the network to a second SIM card of the host apparatus; and displaying an incoming call interface and playing a ringtone in response to the second incoming call information, and sending the second incoming call information to the host apparatus. According to the foregoing technical solution, when making a call with the network by using the first SIM card, the host apparatus can send the network registration instruction to the auxiliary apparatus; after the auxiliary apparatus successfully registers with the network based on the network registration instruction, the auxiliary apparatus receives the second incoming call information that is sent by the network to the second SIM card, and sends the second incoming call information to the host apparatus. In this way, the host apparatus avoids missing a call from the network to the second SIM card of a second apparatus.

In an implementation, as defined in claim 2, the method further includes: hanging up a call of the second incoming call information in response to a user's operation of hanging up the second incoming call information on the incoming call interface, closing the incoming call interface, generating a call record of the second incoming call information, generating a hang-up instruction, and sending the hang-up instruction to the host apparatus. According to the foregoing technical solution, the auxiliary apparatus in this application sends the hang-up instruction to the host apparatus, so that the host apparatus closes the incoming call interface based on the hang-up instruction and generates the call record of the second incoming call information. In this way, the host apparatus further avoids missing a call record from the network to the second SIM card of the host apparatus.

In an implementation, as defined in claim 3, the method further includes: if it is detected that the user does not perform an answer or hang-up operation on the incoming call interface, waiting for the network to hang up; and sending the call record of the second incoming call information to the host apparatus after the network hangs up. According to the foregoing technical solution, after the network hangs up the second incoming call, the host apparatus receives and displays the call record of the second incoming call information that is sent by the auxiliary apparatus. In this way, when the network hangs up the second incoming call, the host apparatus can still record the second incoming call.

In an implementation, as defined in claim 4, the method further includes: if it is detected that the user receives the second incoming call information by using the incoming call interface, generating an interface closing instruction, and sending the interface closing instruction to the host apparatus; and after the call of the second incoming call information ends, generating a hang-up instruction, and sending the hang-up instruction to the host apparatus. According to the foregoing technical solution, the user receives and hangs up the second incoming call information by using the incoming call interface of the auxiliary apparatus.

In an implementation, as defined in claim 5, the method further includes: if it is detected that the user receives the second incoming call information by using the incoming call interface of the host apparatus, sending a voice of the second incoming call information to the host apparatus. According to the foregoing technical solution, the host apparatus can receive the second incoming call by using the voice of the second incoming call that is sent by the auxiliary apparatus.

In an implementation, as defined in claim 6, the sending the voice of the second incoming call information to the host apparatus includes: sending the voice of the second incoming call information to the host apparatus by using Bluetooth or Wi-Fi.

In an implementation, as defined in claim 7, the method further includes: after the second incoming call ends, using the modem in an idle SIM card slot to de-register with the network of an operator, so as to release the modem in an idle SIM card slot and a radio frequency resource. According to the foregoing technical solution, after the second incoming call ends, the auxiliary apparatus releases the modem in the idle SIM card slot and the radio frequency resource, thereby saving a call resource and ensuring a call requirement of the auxiliary apparatus.

In an implementation, as defined in claim 8, the method further includes: sending status information of the auxiliary apparatus to the host apparatus, where the status information of the auxiliary apparatus includes status information of a SIM card of the auxiliary apparatus and a hash value of a login account. According to the foregoing technical solution, whether the auxiliary apparatus is a target device is determined based on the status information of the SIM card of the auxiliary apparatus and the hash value of the login account.

In an implementation, as defined in claim 9, the registering, in response to the network registration instruction, with the network by using a modem in an idle SIM card slot on an auxiliary apparatus includes: sending, to the host apparatus, a request instruction for obtaining information about a second SIM card of the host apparatus; receiving the information about the second SIM card that is sent by the host apparatus in response to the request instruction, where the information about the second SIM card includes at least public land mobile network (Public Land Mobile Network, PLMN) information and AAA authentication information; and registering with the network by using the modem in an idle SIM card slot based on the PLMN information and the AAA authentication information. According to the foregoing technical solution, network registration may be completed by using the modem in an idle SIM card slot based on the PLMN information and the AAA authentication information that are sent by the host apparatus.

In an implementation, as defined in claim 10, the method further includes: receiving short message information that is sent by the network to the second SIM card, and sending the short message information to the host apparatus. According to the foregoing technical solution, after the auxiliary apparatus completes registration of the second SIM card, the host apparatus can receive the short message information sent by the auxiliary apparatus, so as to prevent the second SIM card 42 from missing incoming call information.

According to a second aspect, outside the scope of the invention as claimed, this application provides a method for avoiding missing a call, where the method receiving an IMS network registration instruction sent by a host apparatus, where the host apparatus sends the IMS network registration instruction when being connected to a network by using a first SIM card of the host apparatus. The method includes: registering, in response to the IMS network registration instruction, with a network by using an LTE network, information about a second SIM card of the host apparatus, and a modem (modem) of an auxiliary apparatus, where the network is an IMS network. The method further includes: receiving second incoming call information that is sent by the network to the second SIM card of the host apparatus, hanging up an incoming call of the second incoming call information in response to the second incoming call information, and sending the second incoming call information to the host apparatus. In the foregoing solution, the second SIM card of the host apparatus uses a radio frequency resource such as a receive antenna or a transmit antenna of the auxiliary apparatus through time division multiplexing with the SIM card of the auxiliary apparatus to generate a missed call record of the second incoming call information, so as to avoid missing an incoming call of the second SIM card.

In an implementation, the method further includes: receiving a call end notification of the first SIM card that is sent by the host apparatus, deregistering with the network to disconnect a communication connection between the network and the auxiliary apparatus in response to the call end notification, generating a connection disconnection instruction, and sending the connection disconnection instruction to the host apparatus, so that the host apparatus re-registers with the network based on the information about the second SIM card in response to the connection disconnection instruction. According to the foregoing technical solution, when receiving call end information of the first SIM card of the host apparatus, the auxiliary apparatus deregisters with the network to release the modem in the idle SIM card slot and the radio frequency resource, thereby saving a call resource and ensuring a call requirement of the auxiliary apparatus, and enabling the host apparatus to easily make a call by using the second SIM card.

In an implementation, the method further includes: sending second status information of the auxiliary apparatus to the auxiliary apparatus, where the second status information of the auxiliary apparatus includes status information of the SIM card of the auxiliary apparatus, enabling information of a data service, and a hash value of a login account.

In an implementation, the method further includes: receiving short message information that is sent by the network to the second SIM card, and sending the short message information to the host apparatus. According to the foregoing technical solution, after the auxiliary apparatus completes registration of the second SIM card, the host apparatus can receive the short message information sent by the auxiliary apparatus, so as to prevent the second SIM card from missing incoming call information. According to a third aspect, as defined in claim 11, this application provides a method for avoiding missing a call, where the method is carried out in a host apparatus, and the method includes: establishing a call connection between a first SIM card and a network in response to first incoming call information that is sent by the network and that is received by the first SIM card of the host apparatus or in response to outgoing call information that is sent by the first SIM card to the network; sending a network registration instruction to an auxiliary apparatus; receiving, from the auxiliary apparatus, second incoming call information that is sent by the network to a second SIM card of the host apparatus; and displaying an incoming call interface based on the second incoming call information, where the second incoming call information is displayed on the incoming call interface. According to the foregoing technical solution, when the host apparatus makes a call with the network by using the first SIM card, the host apparatus can send the network registration instruction to the auxiliary apparatus, so that the auxiliary apparatus receives, after successfully registering with the network, the second incoming call information that is sent by the network to the second SIM card, and sends the second incoming call information to the host apparatus. In this way, the host apparatus avoids missing a call from the network to the second SIM card of a second apparatus.

In an implementation, the method further includes: receiving a hang-up instruction that is sent by the auxiliary apparatus and that is used to hang up the second incoming call information; and closing the incoming call interface in response to the hang-up instruction, and generating a call record of the second incoming call information. According to the foregoing technical solution, the host apparatus in this application closes the incoming call interface based on the hang-up instruction sent by the auxiliary apparatus and generates the call record of the second incoming call information. In this way, the host apparatus further avoids missing a call record of a call from the network to the second SIM card of the host apparatus.

In an implementation, the method further includes: receiving a call record of the second incoming call information that is sent by the auxiliary apparatus; and displaying the call record of the second incoming call information. According to the foregoing technical solution, after the network hangs up the second incoming call, the host apparatus receives and displays the call record of the second incoming call information that is sent by the auxiliary apparatus, so that when the network hangs up the second incoming call, the host apparatus can still record the call of the second incoming call information. In this way, the host apparatus further avoids missing a call record of a call from the network to the second SIM card of the host apparatus.

In an implementation, the method further includes: receiving a hang-up instruction that is sent by the auxiliary apparatus and that is generated after a call of the second incoming call information ends; and closing the incoming call interface in response to the hang-up instruction, and generating a call record of the second incoming call information. According to the foregoing technical solution, after receiving the hang-up of the second incoming call information, the host apparatus can close the incoming call interface of the host apparatus and generate the call record of the second incoming call information.

In an implementation, as defined in claim 12, the method further includes: if it is detected that a user receives the second incoming call by using the incoming call interface, hanging up the incoming call of the first SIM card, and receiving a voice of the second incoming call information transmitted by the auxiliary apparatus; and after the call of the second incoming call information ends, closing the incoming call interface of the second incoming call information, and generating a call record of the second incoming call information. According to the foregoing technical solution, the host apparatus can receive the second incoming call based on the voice of the second incoming call information sent by the auxiliary apparatus, and generate the call record of the second incoming call information after the call of the second incoming call information ends.

In an implementation, as defined in claim 13, the sending a network registration instruction to an auxiliary apparatus includes: obtaining status information of the auxiliary apparatus, and determining, based on the status information of the auxiliary apparatus, whether the auxiliary apparatus is a target device; and when it is determined that the auxiliary apparatus is the target device, sending the network registration instruction to the auxiliary apparatus.

In an implementation, the determining, based on the status information of the auxiliary apparatus, whether the auxiliary apparatus is a target device includes: determining, based on the status information of a SIM card of the auxiliary apparatus, whether the auxiliary apparatus has a network registration capability, determining whether the auxiliary apparatus includes a modem in an idle SIM card slot, and determining that the auxiliary apparatus is not in a call state; determining, based on a hash value of a login account of the auxiliary apparatus, whether the host apparatus and the auxiliary apparatus are personal devices; and when it is determined that the auxiliary apparatus has the network registration capability and has an idle SIM card slot, the auxiliary apparatus is not in the call state, and the auxiliary apparatus and the host apparatus are personal devices, determining that the auxiliary apparatus is the target device. According to the foregoing technical solution, when the auxiliary apparatus has the network registration capability and has an idle SIM card slot, the auxiliary apparatus is not in the call state, and the auxiliary apparatus and the host apparatus are personal devices, it is determined that the auxiliary apparatus is the target device.

In an implementation, the sending a network registration instruction to an auxiliary apparatus includes: sending an IP multimedia subsystem (IP Multimedia Subsystem, IMS) network registration instruction to the auxiliary apparatus, including: obtaining second status information of the auxiliary apparatus, and determining, based on the second status information of the auxiliary apparatus, whether the auxiliary apparatus is a target device; and when it is determined that the auxiliary apparatus is the target device, sending the IMS network instruction to the auxiliary apparatus. In the foregoing solution, the second SIM card of the host apparatus uses a radio frequency resource such as a receive antenna or a transmit antenna of the auxiliary apparatus through time division multiplexing with the SIM card of the auxiliary apparatus to generate a missed call record of the second incoming call information, so as to avoid missing an incoming call of the second SIM card.

In an implementation, the determining, based on the second status information of the auxiliary apparatus, whether the auxiliary apparatus is a target device includes: based on the status information of the SIM card of the auxiliary apparatus, determining whether the auxiliary apparatus has registered with an LTE network, determining whether the auxiliary apparatus is in a standby state or has no idle SIM card slot, and determining whether the auxiliary apparatus is not in a call state; determining, based on enabling information of a data service of the auxiliary apparatus, that the auxiliary apparatus has a data channel connected to the network; determining, based on a hash value of a login account of the auxiliary apparatus, whether the host apparatus and the auxiliary apparatus are personal devices; and when it is determined that the auxiliary apparatus has registered with the LTE network, the auxiliary apparatus is in a standby state or has no idle SIM card slot, the auxiliary apparatus is not in the call state, the auxiliary apparatus has a data channel connected to the network, and the auxiliary apparatus and the host apparatus are personal devices, determining that the auxiliary apparatus is the target device. According to the foregoing technical solution, when the auxiliary apparatus has registered with the LTE network, the auxiliary apparatus is in the standby state or has no idle SIM card slot, the auxiliary apparatus is not in the call state, the auxiliary apparatus has a data channel connected to the network, and the auxiliary apparatus and the host apparatus are personal devices, it is determined that the auxiliary apparatus is the target device.

In an implementation, the method further includes: receiving a connection disconnection instruction generated when the auxiliary apparatus deregisters with the network; and re-registering with the network based on information about the second SIM card in response to the connection disconnection instruction. According to the foregoing technical solutions, the auxiliary apparatus deregisters with the network, so as to release a modem in an idle SIM card slot and a radio frequency resource, thereby saving a call resource and ensuring a call requirement of the auxiliary apparatus. In addition, the host apparatus registers with the network based on the information about the second SIM card, so that the host apparatus can make a call by using the second SIM card.

According to a fourth aspect, outside the scope of the invention as claimed, this application provides a system for avoiding missing a call. The system includes: a host apparatus, configured to: establish a call connection between a first SIM card and a network in response to first incoming call information that is sent by the network and that is received by the first SIM card of the host apparatus or in response to outgoing call information that is sent by the first SIM card to the network; send a network registration instruction to an auxiliary apparatus; and display an incoming call interface based on second incoming call information sent by the auxiliary apparatus, where the second incoming call information is displayed on the incoming call interface; and an auxiliary apparatus, configured to: register, in response to the network registration instruction, with the network by using a modem (modem) in an idle SIM card slot on an auxiliary apparatus; receive second incoming call information that is sent by the network to a second SIM card of the host apparatus; and display an incoming call interface and play a ringtone in response to the second incoming call information, and send the second incoming call information to the host apparatus. According to the foregoing technical solution, when making a call with the network by using the first SIM card, the host apparatus can send the network registration instruction to the auxiliary apparatus; after the auxiliary apparatus successfully registers with the network based on the network registration instruction, the auxiliary apparatus receives the second incoming call information that is sent by the network to the second SIM card, and sends the second incoming call information to the host apparatus. In this way, the host apparatus avoids missing a call from the network to the second SIM card of a second apparatus.

In an implementation, the system further includes: the auxiliary apparatus hangs up a call of the second incoming call information in response to a user's operation of hanging up the second incoming call information on the incoming call interface, closes the incoming call interface, generates a call record of the second incoming call information, generates a hang-up instruction, and sends the hang-up instruction to the host apparatus; and the host apparatus closes the incoming call interface in response to the hang-up instruction, and generates a call record of the second incoming call information. According to the foregoing technical solution, the auxiliary apparatus in this application sends the hang-up instruction to the host apparatus, so that the host apparatus closes the incoming call interface based on the hang-up instruction and generates the call record of the second incoming call information. In this way, the host apparatus further avoids missing a call record of a call from the network to the second SIM card of the host apparatus.

In an implementation, the system further includes: if it is detected that the user does not perform an answer or hang-up operation on the incoming call interface, the auxiliary apparatus waits for the network to hang up; after the network hangs up, the auxiliary apparatus sends the call record of the second incoming call information to the host apparatus; and the host apparatus displays the call record of the second incoming call information. According to the foregoing technical solution, after the network hangs up the second incoming call, the host apparatus receives and displays the call record of the second incoming call information that is sent by the auxiliary apparatus, so that when the network hangs up the second incoming call, the host apparatus can still record the call of the second incoming call information. In this way, the host apparatus further avoids missing a call record of a call from the network to the second SIM card of the host apparatus.

In an implementation, the system further includes: if it is detected that the user receives the second incoming call by using the incoming call interface of the auxiliary apparatus, the auxiliary apparatus generates an interface closing instruction, and sends the interface closing instruction to the host apparatus; the host apparatus closes an incoming call interface of the second incoming call information in response to the interface closing instruction; after the call of the second incoming call information ends, the auxiliary apparatus generates a hang-up instruction, and sends the hang-up instruction to the host apparatus; and the host apparatus closes the incoming call interface in response to the hang-up instruction, and generates a call record of the second incoming call information. According to the foregoing technical solution, when the user receives the second incoming call by using the incoming call interface of the auxiliary apparatus, the incoming call interface of the host apparatus is closed, and the call record of the second incoming call information is generated.

In an implementation, the system further includes: if it is detected that the user receives the second incoming call by using the incoming call interface of the second incoming call information of the host apparatus, the host apparatus hangs up an incoming call of the first SIM card, and receives a voice of the second incoming call information transmitted by the auxiliary apparatus; and after the call of the second incoming call information ends, the host apparatus closes the incoming call interface of the second incoming call information and generates a call record of the second incoming call information. According to the foregoing technical solution, the host apparatus can receive the second incoming call based on the voice of the second incoming call information sent by the auxiliary apparatus, and generate the call record of the second incoming call information after the call of the second incoming call information ends.

In an implementation, that the host apparatus sends a network registration instruction to an auxiliary apparatus further includes: the host apparatus obtains status information of the auxiliary apparatus, and determines, based on the status information of the auxiliary apparatus, whether the auxiliary apparatus is a target device; and when determining that the auxiliary apparatus is the target device, the host apparatus sends the network registration instruction to the auxiliary apparatus.

In an implementation, the determining, based on the status information of the auxiliary apparatus, whether the auxiliary apparatus is a target device includes: determining, based on the status information of a SIM card of the auxiliary apparatus, whether the auxiliary apparatus has a network registration capability, determining whether the auxiliary apparatus includes a modem in an idle SIM card slot, and determining that the auxiliary apparatus is not in a call state; determining, based on a hash value of a login account of the auxiliary apparatus, whether the host apparatus and the auxiliary apparatus are personal devices; and when it is determined that the auxiliary apparatus has the network registration capability and has an idle SIM card slot, the auxiliary apparatus is not in the call state, and the auxiliary apparatus and the host apparatus are personal devices, determining that the auxiliary apparatus is the target device. According to the foregoing technical solution, when the auxiliary apparatus has the network registration capability and has an idle SIM card slot, the auxiliary apparatus is not in the call state, and the auxiliary apparatus and the host apparatus are personal devices, it is determined that the auxiliary apparatus is the target device.

In an implementation, that the auxiliary apparatus registers, in response to the network registration instruction, with the network by using a modem in an idle SIM card slot on the auxiliary apparatus includes: the auxiliary apparatus sends, to the host apparatus, a request instruction for obtaining information about the second SIM card of the host apparatus; receives the information about the second SIM card that is sent by the host apparatus in response to the request instruction, where the information about the second SIM card includes at least public land mobile network (Public Land Mobile Network, PLMN) information and AAA authentication information; and registering with the network by using the modem in an idle SIM card slot based on the PLMN information and the AAA authentication information. According to the foregoing technical solution, network registration may be completed by using the modem in an idle SIM card slot based on the PLMN information and the AAA authentication information that are sent by the host apparatus.

According to a fifth aspect, outside the scope of the invention as claimed, this application provides another system for avoiding missing a call. The system includes: a host apparatus, configured to: establish a call connection between a first SIM card and a network in response to first incoming call information that is sent by the network and that is received by the first SIM card of the host apparatus or in response to outgoing call information that is sent by the first SIM card to the network; send an IP multimedia subsystem (IP Multimedia Subsystem, IMS) network registration instruction to an auxiliary apparatus; and display a missed call record of second incoming call information in response to the second incoming call information sent by the auxiliary apparatus; and an auxiliary apparatus, configured to: register, in response to the IMS network registration instruction, with the network by using an LTE network, information about a second SIM card of the host apparatus, and a modem (modem) of the auxiliary apparatus, where the network is an IMS network; and receive second incoming call information that is sent by the network to a second SIM card of the host apparatus; hang up an incoming call of the second incoming call information in response to the second incoming call information; and send the second incoming call information to the host apparatus. In the foregoing solution, the second SIM card of the host apparatus uses a radio frequency resource such as a receive antenna or a transmit antenna of the auxiliary apparatus through time division multiplexing with the SIM card of the auxiliary apparatus to generate a missed call record of the second incoming call information, so as to avoid missing an incoming call of the second SIM card.

In an implementation, that the host apparatus sends an IMS network registration instruction to an auxiliary apparatus includes: the host apparatus obtains second status information of the auxiliary apparatus, and determines, based on the second status information of the auxiliary apparatus, whether the auxiliary apparatus is a target device; and when determining that the auxiliary apparatus is the target device, the host apparatus sends the IMS network registration instruction to the auxiliary apparatus.

In an implementation, the second status information of the auxiliary apparatus includes status information of the SIM card of the auxiliary apparatus, enabling information of a data service, and a hash value of a login account. According to the foregoing technical solution, whether the auxiliary apparatus is a target device may be determined based on the status information of the SIM card of the auxiliary apparatus, the enabling information of the data service, and the hash value of the login account.

In an implementation, the determining, based on the second status information of the auxiliary apparatus, whether the auxiliary apparatus is a target device includes: based on the status information of the SIM card of the auxiliary apparatus, determining whether the auxiliary apparatus has registered with an LTE network, determining whether the auxiliary apparatus is in a standby state or has no idle SIM card slot, and determining whether the auxiliary apparatus is not in a call state; determining, based on enabling information of a data service, that the auxiliary apparatus has a data channel connected to the network; determining, based on a hash value of a login account of the auxiliary apparatus, whether the host apparatus and the auxiliary apparatus are personal devices; and when it is determined that the auxiliary apparatus has registered with the LTE network, the auxiliary apparatus is in a standby state or has no idle SIM card slot, the auxiliary apparatus is not in the call state, the auxiliary apparatus has a data channel connected to the network, and the auxiliary apparatus and the host apparatus are personal devices, determining that the auxiliary apparatus is the target device. According to the foregoing technical solution, when the auxiliary apparatus has registered with the LTE network, the auxiliary apparatus is in the standby state or has no idle SIM card slot, the auxiliary apparatus is not in the call state, the auxiliary apparatus has a data channel connected to the network, and the auxiliary apparatus and the host apparatus are personal devices, it is determined that the auxiliary apparatus is the target device.

In an implementation, the system further includes: the auxiliary apparatus receives short message information that is sent by the network to the second SIM card, and sends the short message information to the host apparatus. According to the foregoing technical solution, after the auxiliary apparatus completes registration of the second SIM card, the host apparatus can receive the short message information sent by the auxiliary apparatus, so as to prevent the second SIM card from missing incoming call information.

In an implementation, the system further includes: when receiving the short message, the host apparatus stores the short message, and displays the short message in a mailbox of the host apparatus.

In an implementation, the method further includes: the auxiliary apparatus is further configured to: receive a call end notification of the first SIM card that is sent by the host apparatus, deregister, in response to the call end notification, with the network to disconnect a communication connection between the network and the auxiliary apparatus, generate a connection disconnection instruction, and send the connection disconnection instruction to the host apparatus; and the host apparatus re-registers with the network based on the information about the second SIM card in response to the connection disconnection instruction. According to the foregoing technical solution, when receiving call end information of the first SIM card of the host apparatus, the auxiliary apparatus deregisters with the network to release the modem in the idle SIM card slot and the radio frequency resource, thereby saving a call resource and ensuring a call requirement of the auxiliary apparatus. In addition, the host apparatus registers with the network based on the information about the second SIM card, which enables the host apparatus to easily make a call by using the second SIM card.

According to a sixth aspect, as defined in claim 14, an embodiment of this application provides an electronic device, including a processor and a memory, where the processor is coupled to the memory; the memory is configured to store a program instruction; and the processor is configured to read the program instruction stored in the memory, so as to implement the methods of claims 1 to 13 for avoiding missing a call.

According to a seventh aspect, as defined in claim 15, embodiment of this application provides a computer readable storage medium, where the computer readable storage medium stores a program instruction, and when the program instruction is run on an electronic device, the electronic device is enabled to perform the foregoing methods of claims 1 to 13 for avoiding missing a call.

In addition, for technical effects brought by the sixth aspect and the seventh aspect, reference may be made to the descriptions about the design methods in the foregoing method parts. Details are not described herein again.

### BRIEF DESCRIPTION OF DRAWINGS

To describe technical solutions in embodiments of this application more clearly, the following briefly describes accompanying drawings that need to be used in embodiments.
FIG. 1A is a call forwarding interface;
FIG. 1B is a dual-card management interface;
FIG. 2 is a schematic diagram of an architecture of a system for avoiding missing a call according to an embodiment of this application;
FIG. 3 is a schematic flowchart of a method for avoiding missing a call according to an embodiment of this application;
FIG. 4 is a schematic diagram of calling a host apparatus by a call apparatus according to an embodiment of this application;
FIG. 5 is a schematic diagram of an incoming call interface according to an embodiment of this application;
FIG. 6 is a schematic flowchart of a method for avoiding missing a call according to an embodiment of this application; and
FIG. 7 is a block diagram of a software architecture of an electronic device according to an embodiment of this application.

### DESCRIPTION OF EMBODIMENTS

The terms "first" and "second" are used herein for description only, and cannot be understood as indicating or implying relative importance or implicitly indicating the quantity of indicated technical features. Therefore, the features defined with "first" and "second" can explicitly or implicitly include one or more of the features. In descriptions of embodiments of this application, the words such as "example" or "for example" are used to indicate provision of examples, illustrations, or descriptions. Any embodiment or design scheme described as "example" or "for example" in the embodiments of this application should not be interpreted as being more preferred or advantageous than other embodiments or design schemes. To be precise, the use of the word such as "example" or "for example" is intended to present a related concept in a specific manner.

Unless otherwise defined, all technical and scientific terms as used herein have the same meanings as those usually understood by a person skilled in the art of this application. The terms used in the specification of this application are only used to describe particular embodiments, but not intended to limit this application. It should be understood that, unless otherwise stated in this application, "/" means "or". For example, A/B may represent A or B. In this application, "and/or" is merely used to describe an association relationship between associated objects, and indicates that three relationships may exist. For example, A/B may indicate the following three cases: Only A exists, both A and B exist, and only B exists. "At least one" means one or more. "A plurality of" means two or more. For example, "at least one of a, b, or c" may represent seven cases: "a", "b", "c", "a and b", "a and c", "b and c", and "a, b, and c".

A user interface (User Interface, UI) in embodiments of this application is a media interface for interaction and information exchange between an application or an operating system and a user, and can convert information between an internal form and a form acceptable by the user. A user interface of an application is source code written in a specific computer language such as Java or extensible markup language (extensible markup language, XML). The source code of the interface is parsed and rendered on an electronic device, and is finally presented as content that can be recognized by the user, for example, a control such as a picture, a text, or a button. A control (control) is a basic element of a user interface. Typical controls include a button (button), widget (widget), a toolbar (toolbar), a menu bar (menu bar), a text box (text box), a scrollbar (scrollbar), an image, and a text. Attributes and content of the controls in the interface are defined by using labels or nodes. For example, XML specifies controls included in the interface by using nodes such as <Textview>, <ImgView>, and <VideoView>. A node is corresponding to a control or attribute in the interface. The node is presented as content visible to a user after being parsed and rendered. In addition, interfaces of many applications, such as a hybrid application (hybrid application) interface, generally include a web page. A web page, also referred to as a page, may be understood as a special control embedded in an application interface. The web page is source code written in a specific computer language, such as hyper text markup language (hyper text markup language, HTML), cascading style sheets (cascading style sheets, CSS), and JavaScript (JavaScript, JS). The source code of the web page may be loaded and displayed, by using a browser or a web page display component similar to a browser function, as content recognizable by a user. Specific content included in the web page is also defined by using a label or a node in the source code of the web page. For example, the HTML defines elements and attributes of the web page by using <p>, <img>, <video>, and <canvas>.

A common presentation form of the user interface is a graphic user interface (graphic user interface, GUI), which refers to a user interface that is displayed in a graphical manner and that is related to a computer operation. It may be an interface element such as an icon, a window, or a control that is displayed on a display of an electronic device.

To better understand a system for avoiding missing a call disclosed in an embodiment of this application, the following describes the system for avoiding missing a call in this application.

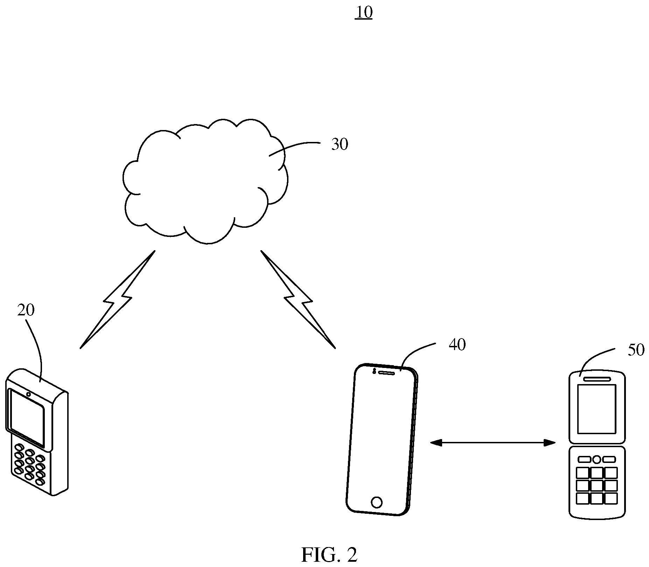

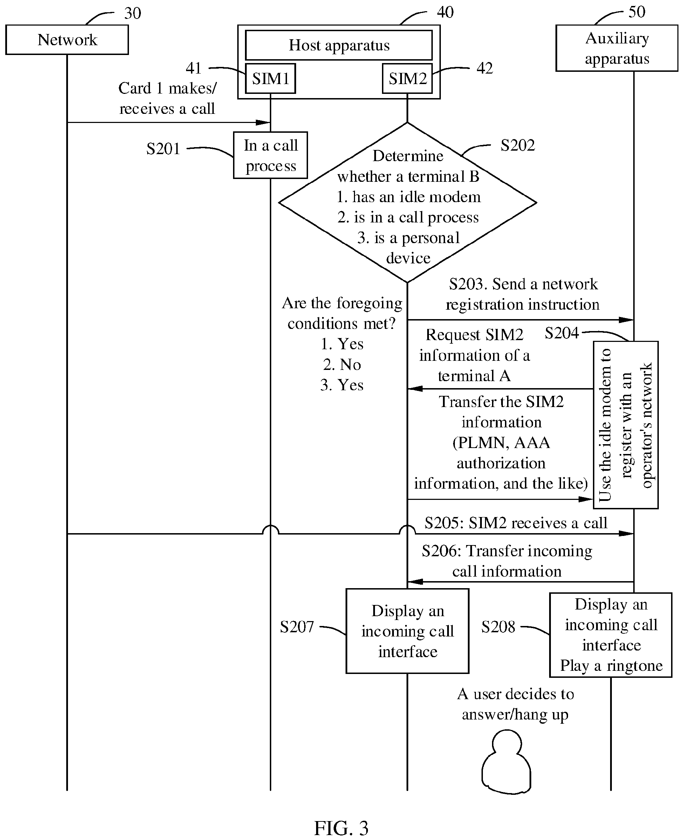

FIG. 2 is a schematic diagram of an architecture of a system for avoiding missing a call according to an embodiment of this application. As shown in FIG. 2, a system 10 for avoiding missing a call includes a call apparatus 20, a network 30, a host apparatus 40, and an auxiliary apparatus 50. The call apparatus 20 and the host apparatus 40 are separately communicatively connected to the network 30. For example, the network 30 may be at least one of a 2G network, a 3G network, a 4G-LET network, or a 5G new radio (5G-New Radio) network. The network 30 is used to: receive incoming call information of the call apparatus 20 or outgoing call information of the host apparatus 40, and send the incoming call information of the call apparatus 20 to the host apparatus 40, or send the outgoing call information of the host apparatus 40 to the call apparatus 20, so as to implement a call connection between the call apparatus 30 and the host apparatus 40. In an embodiment of this application, the host apparatus 40 includes two SIM cards. The host apparatus 40 communicates with the call apparatus 20 by using one of the two SIM cards. For ease of description, the two SIM cards are respectively defined as a first SIM card 41 and a second SIM card 42 (refer to FIG. 3). In this embodiment, the host apparatus 40 is communicatively connected to the auxiliary apparatus 50. In this embodiment, the auxiliary apparatus 50 is configured to: receive SIM card data of the first SIM card 41 or the second SIM card 42 that is sent by the host apparatus 40, and register with the network 30 based on the SIM card data. After registering with the network 30, the auxiliary apparatus 50 receives incoming call information of the first SIM card 41 or the second SIM card 42, and sends the incoming call information to the second SIM card 42 of the host apparatus 40. For example, when the first SIM card 41 in the host apparatus 40 communicates with the network 30, the second SIM card 42 is in a turn-off state. To avoid that the second SIM card 42 in the turn-off state misses an incoming call or a short message, in this application, the auxiliary apparatus 50 receives an incoming call or a short message sent by the network 30 to the second SIM card 42 in the host apparatus 40, and sends the incoming call or the short message to the second SIM card of the host apparatus 40. In this embodiment, the host apparatus 40 and the auxiliary apparatus 50 may be electronic devices that have a SIM card-based call function and that are independent of each other, such as mobile phones or wearable devices. The call apparatus 20 may be an electronic device that has a SIM card-based call function, such as a mobile phone or a wearable device.

It should be noted that the foregoing description does not constitute a limitation on a diagram of an architecture of the system 10 for avoiding missing a call in this embodiment of this application. The diagram of the architecture of the system 10 for avoiding missing a call in this embodiment of this application includes but is not limited to that shown in FIG. 2.

FIG. 3 is a schematic flowchart of a method for avoiding missing a call according to an embodiment of this application. The method is applied to the foregoing system 10 for avoiding missing a call.

The method specifically includes the following steps.

Step S201: The host apparatus 40 establishes a call connection of the first SIM card 41 in response to first incoming call information that is sent by the network 30 and that is received by the first SIM card 41 or in response to outgoing call information that is sent by the first SIM card 41 to the network 30.

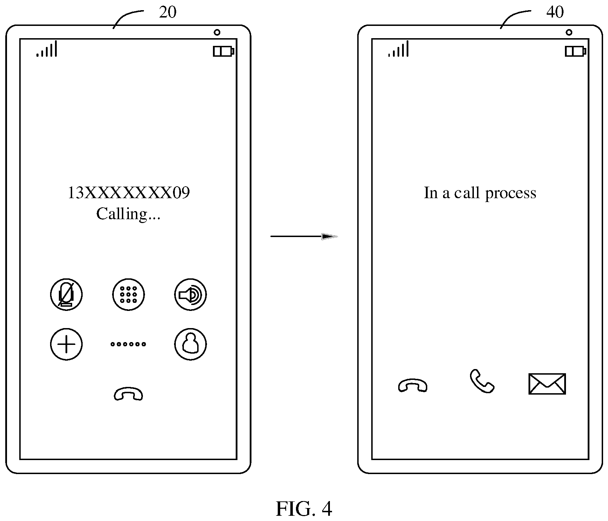

Referring to FIG. 4, in this embodiment, when the call apparatus 20 dials a phone number of the first SIM card 41 of the host apparatus 40, the call apparatus 20 generates the first incoming call information including the phone number of the first SIM card 41. The network 30 receives the first incoming call information sent by the call apparatus 20, and sends the first incoming call information to the first SIM card 41 of the host apparatus 40 based on the phone number of the first SIM card 41 in the first incoming call information. In response to the first incoming call information that is sent by the network 30 and that is received by the first SIM card 41, the host apparatus 40 establishes a call connection between the first SIM card 41 and the call apparatus 20.

In an embodiment of this application, the first SIM card 41 of the host apparatus 40 establishes a communication connection to the auxiliary apparatus 50 before receiving the first incoming call information of the call apparatus 40. In another embodiment of this application, the host apparatus 40 establishes a communication connection between the host apparatus 40 and the auxiliary apparatus 50 in response to the first incoming call information that is sent by the network 30 and that is received by the first SIM card 41. The host apparatus 40 and the auxiliary apparatus 50 may be communicatively connected to each other in at least one communication manner of Wi-Fi or Bluetooth.

Step S202: The host apparatus 40 obtains status information of the auxiliary apparatus 50 that is sent by the auxiliary apparatus 50, and determines, based on the status information of the auxiliary apparatus 50, whether the auxiliary apparatus 50 is a target device.

According to the invention, the auxiliary apparatus 50 needs to meet the following conditions before being determined as the target device: being a personal device; having a communication capability and can register with the network 30; including a modem (modem) in an idle SIM card slot, where the idle SIM card slot may be in one of the following states: no SIM card is inserted, only one SIM card is inserted on a dual-card device, a SIM card is inserted but the SIM card is in a disabled state, or the like; and not being used for a call. For example, the auxiliary apparatus 50 may be a device such as a mobile phone, a callable tablet, or a callable watch.

In this embodiment, the status information of the auxiliary apparatus 50 includes but is not limited to the status information of the auxiliary apparatus 50 and a hash value of a login account. When obtaining the status information of the SIM card of the auxiliary apparatus 50, the host apparatus 40 determines, based on the status information of the SIM card of the auxiliary apparatus 50, whether the auxiliary apparatus 50 is capable of registering with the network 30, determines whether the auxiliary apparatus 50 includes a modem in an idle SIM card slot, and determines whether the auxiliary apparatus 50 is not in a call state. For example, if no SIM card is inserted into at least one SIM card slot on the auxiliary apparatus 50, or a SIM card is inserted into at least one SIM card slot on the auxiliary apparatus 50, but the SIM card is disabled, it is determined that the auxiliary apparatus 50 includes a modem in an idle SIM card slot.

When obtaining the hash value of the login account of the auxiliary apparatus 50, the host apparatus 40 determines, based on the hash value of the login account of the auxiliary apparatus 50, whether the host apparatus 40 and the auxiliary apparatus 50 are personal devices. Specifically, when obtaining the hash value of the login account of the auxiliary apparatus 50, the host apparatus 40 compares the hash value of the login account of the host apparatus 40 with the hash value of the login account of the auxiliary apparatus 50; and when a comparison result shows that the two hash values are the same, it is determined that the host apparatus 40 and the auxiliary apparatus 50 are personal devices. In this embodiment, the login account includes but is not limited to a power-on login account, and a login account of an application APP.

In this embodiment, the determining, based on the status information of the auxiliary apparatus 50, whether the auxiliary apparatus 50 is a target device further includes: determining, based on the status information of the auxiliary apparatus 50, whether the auxiliary apparatus 50 and the host apparatus 40 are two devices that use a same account for login, where if the auxiliary apparatus 50 and the host apparatus 40 are two devices that use the same account for login, it is determined that the auxiliary apparatus 50 and the host apparatus 40 are personal devices; or if the auxiliary apparatus 50 and the host apparatus 40 are two devices that use different accounts for login, it is determined that both the auxiliary apparatus 50 and the host apparatus 40 are not personal devices.

In another embodiment, the host apparatus 40 and the auxiliary apparatus 50 are two devices that have been mutually authenticated in advance by using a quick response code, a PIN code, or the like, authentication information is stored in trusted storage areas of the devices, and the authentication information needs to be checked before the devices transmit data.

In another embodiment, if the host apparatus 40 and the auxiliary apparatus 50 are two devices that complete authentication in a preset authentication manner (for example, a quick response code authentication manner or a PIN code authentication manner), it is determined that the host apparatus 40 and the auxiliary apparatus 50 are personal devices, and the authentication information is temporarily stored in the devices for use by a current call service.

In this embodiment, when the host apparatus 40 determines that the auxiliary apparatus 50 is capable of registering with the network 30, the auxiliary apparatus 50 includes an idle SIM card slot, the auxiliary apparatus 50 is not in a call state, and the auxiliary apparatus 50 and the host apparatus 40 are personal devices, it is determined that the auxiliary apparatus is the target device. In this embodiment, if the auxiliary apparatus 50 is the target device, step S203 is performed; otherwise, if the auxiliary apparatus 50 is not the target device, a process ends.

Step S203: The host apparatus 40 sends a network registration instruction to the auxiliary apparatus 50.

Step S204: The auxiliary apparatus 50 registers with the network 30 by using the modem in an idle SIM card slot.

In this embodiment, that the auxiliary apparatus 50 registers with the network 30 by using the modem in an idle SIM card slot includes: the auxiliary apparatus 50 sends, to the host apparatus 40, a request instruction for obtaining information about the second SIM card 42 of the host apparatus 50, receives the information about the second SIM card 42 that is sent by the host apparatus 40 in response to the request instruction, where the information about the second SIM card 42 includes at least public land mobile network (Public Land Mobile Network, PLMN) information and AAA authentication information, and registers with the network 30 by using the modem in an idle SIM card slot based on the PLMN information and the AAA authentication information.

In this embodiment, the host apparatus 40 transmits the information about the second SIM card 42 to the auxiliary apparatus 50 by using Bluetooth or Wi-Fi; registers with the network 30 by using the modem in an idle SIM card slot and a radio frequency resource of the auxiliary apparatus 50; and after a call comes in on the second SIM card 42, the auxiliary apparatus 50 and the second SIM card 42 simultaneously display an incoming call notification and play a ringtone as a reminder.

Step S205: The auxiliary apparatus 50 receives second incoming call information that is sent by the network 30 to the second SIM card 42 of the second apparatus 40.

Step S206: The auxiliary apparatus 50 sends the second incoming call information to the host apparatus 40 in response to the second incoming call information.

Step S207: The host apparatus 40 displays an incoming call interface in response to the second incoming call information, where the incoming call interface displays the second incoming call information. In this embodiment, the auxiliary apparatus 50 sends the second incoming call information to the second SIM card 42 of the host apparatus 40.

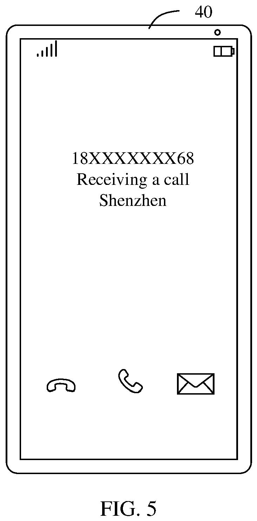

The second SIM card 42 of the host apparatus 40 displays an incoming call interface that includes the second incoming call information in response to the second incoming call information. For example, FIG. 5 is a schematic diagram of an incoming call interface according to an embodiment of this application. After receiving the second incoming call information, the host apparatus 40 displays the second incoming call information by using the incoming call interface.

Step S208: The auxiliary apparatus 50 displays the incoming call interface in response to the second incoming call information, and plays a ringtone for an incoming call.

When the host apparatus 40 in this application makes a call with the network 30 by using the first SIM card 41, the host apparatus 40 can send data of the second SIM card 42 to the auxiliary apparatus 50. After the auxiliary apparatus 50 successfully registers with the network 30 based on the data of the second SIM card 42, the auxiliary apparatus 50 receives the second incoming call information that is sent by the network 30 to the second SIM card 42, and sends the second incoming call information to the host apparatus. In this way, the host apparatus 40 avoids missing a call from the network 30 to the second SIM card 42 of the second apparatus 40.

In this embodiment, the user hangs up or answers the second incoming call by using the incoming call interface displayed by the auxiliary apparatus 50. In this embodiment, the method further includes: the auxiliary apparatus 50 hangs up a call of the second incoming call information in response to a user's operation of hanging up the second incoming call information on the incoming call interface, closes the incoming call interface, generates a call record of the second incoming call information, generates a hang-up instruction, and sends the hang-up instruction to the host apparatus 40; and the host apparatus 40 closes the incoming call interface in response to the hang-up instruction, and generates a call record of the second incoming call information.

In this embodiment, after the auxiliary apparatus 50 displays the incoming call of the second SIM card, if it is detected that the user does not perform an answer or hang-up operation on the incoming call interface, the auxiliary apparatus 50 waits for the network 30 to hang up; after the network hangs up, the auxiliary apparatus 50 sends the call record of the second incoming call information to the host apparatus 40; and the host apparatus 40 displays the call record of the second incoming call information.

In this embodiment, after the auxiliary apparatus 50 displays the incoming call of the second SIM card 42, if it is detected that the user receives the second incoming call by using the incoming call interface of the auxiliary apparatus 50, the auxiliary apparatus 50 generates an interface closing instruction, and sends the interface closing instruction to the host apparatus 40; and the host apparatus 40 closes the incoming call interface of the second incoming call information in response to the interface closing instruction. After the call of the second incoming call information ends, the auxiliary apparatus 50 sends a hang-up instruction to the host apparatus 40; and the host apparatus 40 closes the incoming call interface in response to the hang-up instruction, and generates a call record of the second incoming call information.

In this embodiment, after the host apparatus 40 displays the incoming call interface of the second incoming call information, if it is detected that the user receives a second incoming call by using the incoming call interface of the second incoming call information of the host apparatus 40, the host apparatus 40 hangs up the incoming call of the first SIM card 41, and receives a voice that is of the second incoming call information and that is transmitted by the auxiliary apparatus 50 by using Bluetooth or Wi-Fi. After the call ends, the host apparatus 40 closes the incoming call interface of the second incoming call information, and generates a call record of the second incoming call information.

In this embodiment, after the call of the second incoming call information ends, the auxiliary apparatus 50 deregisters with the network 30 by using the modem in an idle SIM card slot, and releases the modem in the idle SIM card slot and the radio frequency resource. In this embodiment, that the auxiliary apparatus 50 releases the modem in the idle SIM card slot and the radio frequency resource includes: destroying information about the second SIM card 42 of the host apparatus 40 that is stored in the auxiliary apparatus 50. After the information about the second SIM card 42 is destroyed, the modem of the auxiliary apparatus 50 is restored to an idle state, and the state of the SIM card of the auxiliary apparatus 50 is "no SIM card".

In this embodiment, the auxiliary apparatus 50 is further configured to: receive a call end notification of the first SIM card 41 that is sent by the host apparatus 20, deregister, in response to the call end notification, with the network 30, so as to disconnect a communication connection between the network 30 and the auxiliary apparatus 50, record call duration, generate a call end instruction, and send the call end instruction to the host apparatus 40, where the call end instruction includes the call duration and the information about the auxiliary apparatus 50. The host apparatus 40 generates a call record of the second incoming call information in response to the call end instruction, and re-registers with the network 30 based on the data of the second SIM card 42, where the call record includes the call duration and the information about the auxiliary apparatus 50. In this embodiment, the information about the auxiliary apparatus 50 includes identity information of the auxiliary apparatus 50.

In this embodiment, after registering the network 30 based on the information about the SIM card of the second SIM card 42, the auxiliary apparatus 50 is further configured to: receive a short message that is sent by the network 30 to the second SIM card 42, and send the short message to the host apparatus 2. When receiving the short message, the host apparatus 2 stores the short message, and displays the short message in a mailbox of the host apparatus 20. In this embodiment, because the amount of data involved in the short message is very small, the processing time is very short, and occupancy of the receive antenna is very small. Therefore, after receiving the short message of the second SIM card 42, the auxiliary apparatus 50 does not store the short message, and directly sends the short message to the host apparatus 40 by using Bluetooth or Wi-Fi. The auxiliary apparatus 50 stores the short message into the storage device of the host apparatus 40, displays the short message in an inbox of the host apparatus 40, and displays a notification about the unread short message.

In the method for avoiding missing a call provided in the foregoing embodiment, the auxiliary apparatus 50 completes registration with the network 30 by using a modem in an idle SIM card slot and a radio frequency resource (including a receive antenna and a transmit antenna) based on data of the second SIM card 42, so that the auxiliary apparatus 50 receives incoming call information from the network to the second SIM card 42 of the host apparatus 40, and the second SIM card 42 avoids missing the incoming call information.

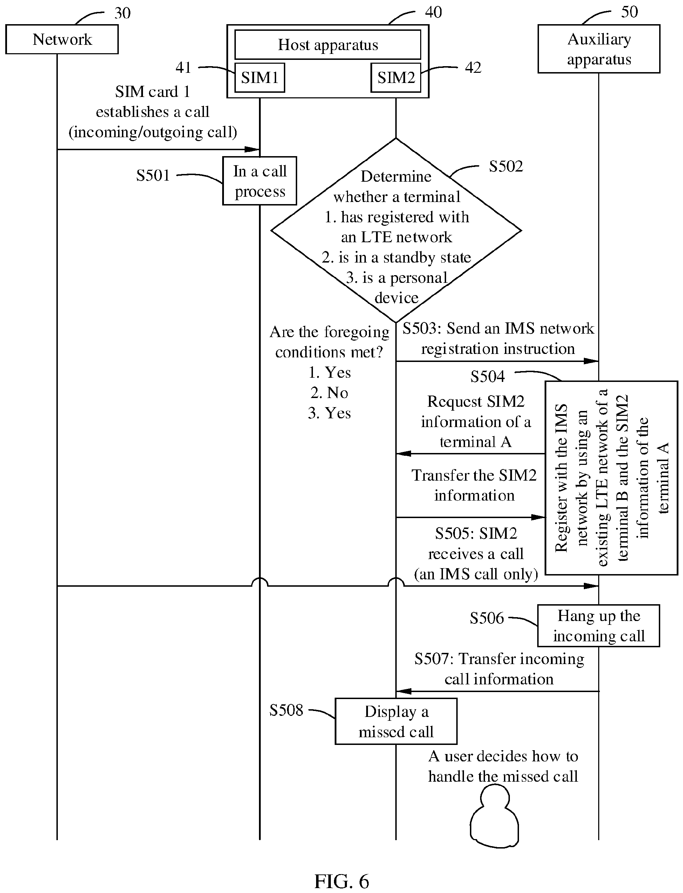

It should be noted that when the auxiliary apparatus 50 does not have an idle SIM card, the auxiliary apparatus 50 may complete registration with the network 30 by using a receive antenna or a transmit antenna in the radio frequency resource of the SIM card through time division multiplexing, so that the second SIM card 42 avoids missing the incoming call information, thereby implementing the method for avoiding missing a call. FIG. 6 is a flowchart of a method for avoiding missing a call according to another embodiment of this application. The method specifically includes the following steps.

Step S501: The host apparatus 40 establishes a call connection of the first SIM card 41 in response to first incoming call information that is sent by the network 30 and that is received by the first SIM card 41 or in response to outgoing call information that is sent by the first SIM card 41 to the network 30.

Step S502: The host apparatus 40 obtains second status information of the auxiliary apparatus 50 sent by the auxiliary apparatus 50, and determines, based on the second status information of the auxiliary apparatus 50, whether the auxiliary apparatus 50 is a target device.

In this embodiment, the auxiliary apparatus 50 needs to meet the following conditions before being determined as the target device: The auxiliary apparatus 50 and the host apparatus 40 are personal devices; having a communication capability, and can register with the LTE network 30; being in the standby state or having no idle SIM card slot; and not being used for a call.

In this embodiment, the second status information of the auxiliary apparatus 50 includes but is not limited to status information of a SIM card of the auxiliary apparatus 50, enabling information of a data service, and a hash value of a login account. When obtaining the status information of the SIM card of the auxiliary apparatus 50, the host apparatus 40 determines, based on the status information of the SIM card of the auxiliary apparatus 50, whether the auxiliary apparatus 50 has registered with the LTE network, determines whether the auxiliary apparatus 50 is in a standby state or has no idle SIM card slot, and determines whether the auxiliary apparatus 50 is in a call state. In this embodiment, that the auxiliary apparatus 50 has no idle SIM card slot means that SIM cards are inserted into all the SIM card slots on the auxiliary apparatus 50, and the SIM cards are being used. The standby state means that the auxiliary apparatus 50 does not perform an operation consuming traffic, such as uploading or downloading. For example, the auxiliary apparatus 50 is in the standby state when playing a local video and browsing a local picture.

In this embodiment, when obtaining the enabling information of the data service, the host apparatus 40 determines that the auxiliary apparatus 40 has a data channel connected to the network 30.

When obtaining the hash value of the login account of the auxiliary apparatus 50, the host apparatus 40 determines, based on the hash value of the login account of the auxiliary apparatus 50, whether the host apparatus 40 and the auxiliary apparatus 50 are personal devices. Specifically, when obtaining the hash value of the login account of the auxiliary apparatus 50, the host apparatus 40 compares the hash value of the login account of the host apparatus 40 with the hash value of the login account of the auxiliary apparatus 50; and when a comparison result shows that the two hash values are the same, it is determined that the host apparatus 40 and the auxiliary apparatus 50 are personal devices.

In this embodiment, when the host apparatus 40 determines that the auxiliary apparatus 50 has registered with the LTE network, that the auxiliary apparatus 50 is in a standby state or has no idle SIM card slot, that the auxiliary apparatus 50 is not in a call state, that the auxiliary apparatus 40 has a data channel connected to the network 30, and that the auxiliary apparatus 50 and the host apparatus 40 are personal devices, it is determined that the auxiliary apparatus is a target device. In this embodiment, if the auxiliary apparatus 50 is the target device, step S503 is performed; otherwise, if the auxiliary apparatus 50 is not the target device, a process ends.

Step S503: The host apparatus 40 sends an IP multimedia subsystem (IP Multimedia Subsystem, IMS) network registration instruction to the auxiliary apparatus 50.

Step S504: The auxiliary apparatus 50 registers, in response to the IMS network registration instruction, with the network 30 by using an LTE network, information about the second SIM card of the host apparatus 40, and the modem of the auxiliary apparatus, where the network 30 is an IMS network.

In this embodiment, that the auxiliary apparatus 50 registers with the IMS network by using the LTE network and the information about the second SIM card of the host apparatus 40 includes: The auxiliary apparatus 50 sends, to the host apparatus 40, a request instruction for obtaining the information about the second SIM card 42 of the host apparatus 50, receives the information about the second SIM card 42 that is sent by the host apparatus 40 in response to the request instruction, and registers with the network 30 by using an existing data channel of the auxiliary apparatus 50 based on the information about the second SIM card 42.

Step S505: The auxiliary apparatus 50 receives the second incoming call information that is sent by the network 30 to the second SIM card 42 of the host apparatus 40.

Step S506: The auxiliary apparatus 50 hangs up an incoming call of the second incoming call information in response to the second incoming call information.

Step S507: The auxiliary apparatus 50 sends the second incoming call information to the host apparatus 40.

Step S508: The host apparatus 40 displays a missed call record of the second incoming call information in response to the second incoming call information.

In this embodiment, because SIM cards are inserted into all the SIM card slots on the auxiliary apparatus 50 and the SIM cards are being used, the second SIM card 42 of the host apparatus 42 can only use a radio frequency resource of the auxiliary apparatus 50, such as a receive antenna or a transmit antenna, through time division multiplexing with the SIM card of the auxiliary apparatus 50 to generate an incoming call reminder, so as to avoid missing an incoming call of the second SIM card 42. For example, when the auxiliary apparatus 50 is a dual-card dual-standby mobile phone, a radio frequency antenna of the dual-card dual-standby mobile phone includes two transmit antennas and one receive antenna. When the dual-card dual-standby mobile phone is in the standby state (that is, not used for a call), only one transmit antenna is used, and the other antenna is used through time division multiplexing. When the auxiliary apparatus 50 registers with the network 30 based on the SIM card data of the second SIM card 42 of the host apparatus 40, the second SIM card 42 of the host apparatus 40 uses two transmit antennas and one receive antenna through time division multiplexing with the two SIM cards of the auxiliary apparatus 50. In this case, the auxiliary apparatus 50 preferentially ensures communication services of the two local SIM cards. After one SIM card in the auxiliary apparatus 50 receives a call, the receive antenna in the auxiliary apparatus 50 is occupied by the SIM card receiving the call in the auxiliary apparatus 50, and the second SIM card 42 of the host apparatus 40 cannot receive the second incoming call information by using the auxiliary apparatus 50. After receiving the second incoming call of the second SIM card 42 of the host apparatus 40, to reduce occupancy of the receive antenna of the auxiliary apparatus 50, the auxiliary apparatus 50 receives the second incoming call information (that is, a paging message of the network 30) from the network 30, and immediately hangs up the incoming call. At the same time, the auxiliary apparatus 50 transmits the incoming call information to the second SIM card 42 of the host apparatus 40 by using Bluetooth or Wi-Fi. The second SIM card 42 of the host apparatus 40 displays a notification about the missed incoming call and a missed call record, and the user cannot receive the incoming call.

In this embodiment, after the auxiliary apparatus 50 receives the second incoming call of the second SIM card 42 of the host apparatus 40, to shorten the time of occupying the receive antenna, the auxiliary apparatus 50 immediately hangs up the incoming call after receiving the incoming call of the incoming call information of the second SIM card 42 of the host apparatus 40, and sends the incoming call information to the host apparatus 40 in a Bluetooth or Wi-Fi communication manner. The host apparatus 40 displays the missed call record in response to the second incoming call information, so as to avoid missing an incoming call of the second SIM card 42.

In this embodiment, the auxiliary apparatus 50 is further configured to: receive a call end notification of the first SIM card 41 that is sent by the host apparatus 20, deregister with the network 30 in response to the call end notification, so as to disconnect a communication connection between the network 30 and the auxiliary apparatus 50, generate a connection disconnection instruction, and send the connection disconnection instruction to the host apparatus 40. The host apparatus 40 re-registers with the network 30 based on the information about the second SIM card 42 in response to the connection disconnection instruction.

It should be noted that the auxiliary apparatus 50 does not require a completely vacant modem (that is, no SIM card is inserted), and only requires the auxiliary apparatus 50 to be in a standby state.

Compared with the conventional technology, in this application, there is no need to modify hardware, and software-only implementation is required, which reduces the costs. In addition, existing call forwarding is separate call service forwarding between two numbers. In the separate call service forwarding, the operator charges card B for incoming call forwarded to card A. However, in this application, the auxiliary apparatus 50 registers with the network 30 based on the information about the second SIM card 42 of the host apparatus 40, so as to implement full service forwarding of the second SIM card 42, and uses a radio frequency resource of a peripheral device to implement a call or a short message, so as to implement services in a same SIM card without additional costs.

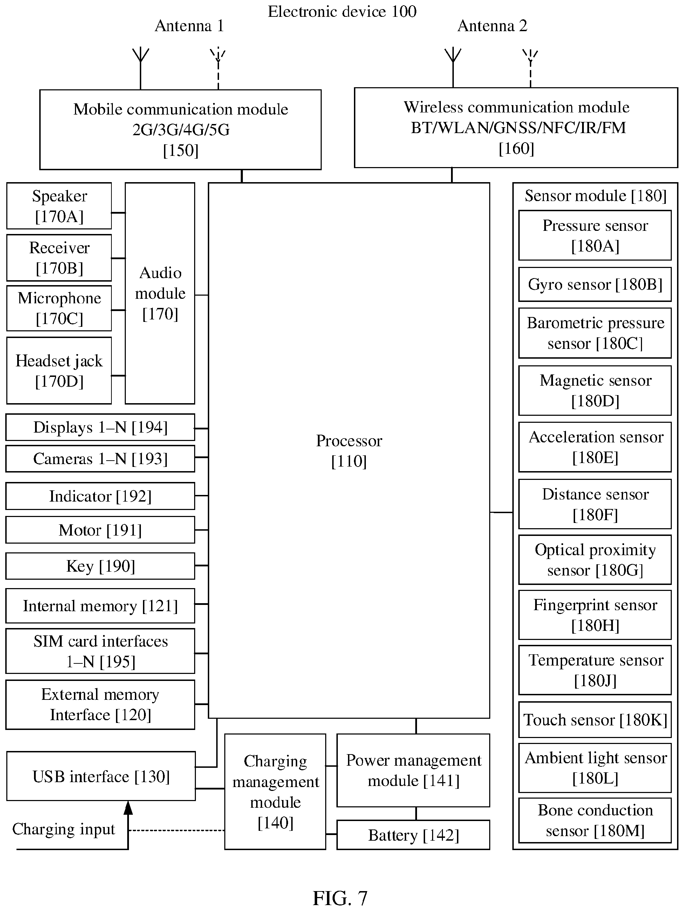

In the embodiments provided in this application, the host apparatus 40 may be an electronic device. The following describes the electronic device 100 in the embodiments of this application. FIG. 7 is a schematic diagram of a structure of an electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that a structure shown in this embodiment of this application does not constitute a specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, so as to control instruction retrieval and instruction execution.

The processor 110 may be further provided with a memory for storing instructions and data. In some embodiments, the memory in the processor 110 is a cache memory. The memory can store an instruction or data that the processor 110 has just used or used cyclically. If the processor 110 needs to use the instruction or data again, the instruction or data can be directly invoked from the memory. Repeated access is avoided, and a waiting time of the processor 110 is reduced, thereby improving system efficiency.

In some embodiments, the processor 110 may include one or more interfaces. The interface may be an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like by using different I2C bus interfaces. For example, the processor 110 may be coupled to the touch sensor 180K by using an I2C interface, so that the processor 110 communicates with the touch sensor 180K by using the I2C bus interface, thereby implementing a touch function of the electronic device 100.

The I2S interface can be used for audio communication. In some embodiments, the processor 110 may include a plurality of groups of I2S buses. The processor 110 may be coupled to the audio module 170 by using the I2S bus to implement communication between the processor 110 and the audio module 170. In some embodiments, the audio module 170 can transmit an audio signal to the wireless communication module 160 by using the I2S interface, so as to implement a function of answering calls by using a Bluetooth headset.

The PCM interface can also be used for audio communication to sample, quantize, and encode analog signals. In some embodiments, the audio module 170 may be coupled to the wireless communication module 160 by using a PCM bus interface. In some embodiments, the audio module 170 can also transmit an audio signal to the wireless communication module 160 by using the PCM interface, so as to implement a function of answering calls by using a Bluetooth headset. Both the I2S interface and the PCM interface can be used for audio communication.

The UART interface is a universal serial data bus used for asynchronous communication. The bus may be a bidirectional communication bus. The bus converts to-be-transmitted data between serial communication and parallel communication. In some embodiments, the UART interface is usually used to connect the processor 110 to the wireless communication module 160. For example, the processor 110 communicates with a Bluetooth module in the wireless communication module 160 by using the UART interface to implement a Bluetooth function. In some embodiments, the audio module 170 can transmit an audio signal to the wireless communication module 160 by using the UART interface, so as to implement a function of playing music by using a Bluetooth headset.

The MIPI interface may be configured to connect the processor 110 to peripheral devices such as the display 194 and the camera 193. The MIPI interface includes a camera serial interface (camera serial interface, CSI), a display serial interface (display serial interface, DSI), and the like. In some embodiments, the processor 110 and the camera 193 communicate by using the CSI to implement a photographing function of the electronic device 100. The processor 110 and the display 194 communicate by using the DSI to implement a display function of the electronic device 100.

The GPIO interface may be configured by using software. The GPIO interface may be configured as a control signal interface, or may be configured as a data signal interface. In some embodiments, the GPIO interface may be configured to connect the processor 110 to the camera 193, the display 194, the wireless communication module 160, the audio module 170, the sensor module 180, and the like. The GPIO interface may be alternatively configured as an I2C interface, an I2S interface, a UART interface, an MIPI interface, or the like.

The USB interface 130 is an interface that complies with USB standard specifications, and may be specifically a Mini USB interface, a Micro USB interface, a USB Type C interface, or the like. The USB interface 130 may be configured to connect to the charger to charge the electronic device 100, or may be configured to transmit data between the electronic device 100 and peripheral devices. The USB interface 130 may be further configured to connect a headset and play audio by using the headset. The interface may be further configured to connect to another electronic device 100, such as an AR device.

It can be understood that the interface connection relationship between the modules illustrated in the embodiments of this application is merely an example for description, and does not constitute a limitation on the structure of the electronic device 100. In some other embodiments of this application, the electronic device 100 may alternatively use an interface connection mode that is different from those in the foregoing embodiments, or use a combination of a plurality of interface connection modes.

The charging management module 140 is configured to receive a charging input from a charger. The charger may be a wireless charger, or may be a wired charger. In some wired charging embodiments, the charging management module 140 may receive a charging input of the wired charger by using the USB interface 130. In some embodiments of wireless charging, the charging management module 140 can receive a wireless charging input by using a wireless charging coil of the electronic device 100. In addition to charging the battery 142, the charging management module 140 may further supply power to the electronic device 100 by using the power management module 141.

The power management module 141 is configured to connect the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a quantity of battery cycles, and a battery health status (leakage or impedance). In some other embodiments, the power management module 141 may alternatively be disposed in the processor 110. In some other embodiments, the power management module 141 and the charging management module 140 may alternatively be disposed in the same device.

The wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may further be multiplexed to improve antenna utilization. For example, the antenna 1 may be multiplexed into a diversity antenna of a wireless local area network. In some other embodiments, the antenna may be used in combination with a tuning switch.

The mobile communication module 150 can provide a wireless communication solution that is applied to the electronic device 100, including 2G/3G/4G/5G and the like. The mobile communication module 150 may include at least one filter, a switch, a power amplifier, a low noise amplifier (low noise amplifier, LNA), and the like. The mobile communication module 150 can receive an electromagnetic wave by using the antenna 1, perform processing such as filtering and amplification on the received electromagnetic wave, and transmit the processed electromagnetic wave to the modem processor for demodulation. The mobile communication module 150 can further amplify a signal that is modulated by the modem processor, and the signal is converted into an electromagnetic wave and radiated by the antenna 1. In some embodiments, at least some functional modules of the mobile communication module 150 may be disposed in the processor 110. In some embodiments, at least some functional modules of the mobile communication module 150 and at least some modules of the processor 110 may be disposed in the same device.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal. The demodulator then transmits the demodulated low-frequency baseband signal to a baseband processor for processing. After being processed by the baseband processor, the low-frequency baseband signal is transmitted to the application processor. The application processor outputs a sound signal by using an audio device (not limited to the speaker 170A and the receiver 170B), or displays an image or video by using the display 194. In some embodiments, the modem processor may be an independent device. In some other embodiments, the modem processor may be independent of the processor 110 and be disposed in the same device as the mobile communication module 150 or another functional module.

The wireless communication module 160 may provide a wireless communication solution that is applied to the electronic device 100, including wireless local area network (wireless local area network, WLAN) (such as a wireless fidelity (wireless fidelity, Wi-Fi) network), Bluetooth (Bluetooth, BT), global navigation satellite system (global navigation satellite system, GNSS), frequency modulation (frequency modulation, FM), near field communication (near field communication, NFC), infrared (infrared, IR), and the like. The wireless communication module 160 may be one or more devices integrating at least one communication processing module. The wireless communication module 160 receives an electromagnetic wave by using the antenna 2, performs frequency modulation and filtering on the electromagnetic wave signal, and sends the processed signal to the processor 110. The wireless communication module 160 can further receive a to-be-sent signal from the processor 110, and perform frequency modulation and amplification on the signal, and the signal is converted into an electromagnetic wave and radiated by the antenna 2.

In some embodiments, the antenna 1 of the electronic device 100 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is an image processing microprocessor, which is connected to the display 194 and the application processor. The GPU is configured to perform mathematical and geometric calculations to render graphics. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light emitting diode (organic light-emitting diode, OLED), an active matrix organic light emitting diode (active-matrix organic light emitting diode, AMOLED), a flex light emitting diode (flex light-emitting diode, FLED), a Miniled, a MicroLed, a Micro-oLed, quantum dot light emitting diodes (quantum dot light emitting diodes, QLED), or the like. In some embodiments, the electronic device 100 may include 1 or N displays 194, where N is a positive integer greater than 1.

The electronic device 100 can implement a photographing function by using the ISP, the camera 193, the video codec, the GPU, the display 194, the application processor, and the like.

The ISP is configured to process data fed back by the camera 193. For example, during photographing, a shutter is opened, light is transmitted to a photosensitive element of the camera through a lens, an optical signal is converted into an electrical signal, and the photosensitive element of the camera transfers the electrical signal to the ISP for processing, so that the electrical signal is converted into an image visible to a naked eye. The ISP can further optimize algorithms for noise, brightness, and a skin color of the image. The ISP can further optimize parameters such as exposure and color temperature in a photographing scenario. In some embodiments, the ISP may be disposed in the camera 193.

The camera 193 is configured to capture a still image or a video. An optical image is generated for an object through the lens and is projected to the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP. The ISP converts the electrical signal into a digital image signal. The ISP outputs the digital image signal to the DSP for processing. The DSP converts the digital image signal into an image signal in a standard format of RGB, YUV, or the like. In some embodiments, the electronic device 100 may include 1 or N cameras 193, and N is a positive integer greater than 1.

The digital signal processor is configured to process a digital signal. In addition to processing a digital image signal, the digital signal processor can further process another digital signal. For example, when the electronic device 100 selects a frequency, the digital signal processor is configured to perform Fourier transform or the like on energy of the frequency.

The video codec is configured to compress or decompress a digital video. The electronic device 100 can support one or more video codecs. In this way, the electronic device 100 can play or record videos in a plurality of encoding formats, such as moving picture experts group (moving picture experts group, MPEG)-1, MPEG-2, MPEG-3, and MPEG-4.

The NPU is a neural-network (neural-network, NN) computing processor. By referring to a structure of a biological neural network, such as a transfer mode between human brain neurons, the NPU quickly processes input information, and can further perform continuous self-learning. The NPU can implement applications such as intelligent cognition of the electronic device 100, for example, image recognition, face recognition, voice recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a fifth generation DDR SDRAM, which is generally referred to as DDR5 SDRAM), and the like.

The non-volatile memory may include a disk storage device and a flash memory (flash memory).

The flash memory may be classified, based on an operating principle, into an NOR flash memory, an NAND flash memory, and a 3D NAND flash memory. The flash memory may be classified, based on a quantity of cells, into a single-level cell (single-level cell, SLC), a multi-level cell (multi-level cell, MLC), a triple-level cell (triple-level cell, TLC), a quad-level cell (quad-level cell, QLC), and the like. The flash memory may be classified into, based on a storage specification, a universal flash storage (English: universal flash storage, UFS), an embedded multimedia memory card (embedded multimedia Card, eMMC), and the like.

The random access memory may be directly read and written by the processor 110, and may be configured to store an executable program (for example, a machine instruction) of an operating system or another running program, and may be further configured to store data of a user and data of an application.

The non-volatile memory may also store an executable program, data of a user, data of an application, and the like, which may be loaded into the random access memory in advance for directly reading and writing by the processor 110.

The external memory interface 120 may be configured to connect to an external non-volatile memory, so as to expand a storage capacity of the electronic device 100. The external non-volatile memory communicates with the processor 110 by using the external memory interface 120, so as to implement a data storage function. For example, music, video, and other files are stored in the external non-volatile memory.

The internal memory 121 or the external memory interface 120 is configured to store one or more computer programs. One or more computer programs are configured to be executed by the processor 110. The one or more computer programs include a plurality of instructions. When the plurality of instructions are executed by the processor 110, a method for avoiding missing a call that is performed on the electronic device 100 in the foregoing embodiment may be implemented, so as to implement a function of the electronic device 100 of avoiding missing a call.

The electronic device 100 can implement audio functions (such as music playing and sound recording) by using the audio module 170, the speaker 170A, the receiver 170B, the microphone 170C, the headset jack 170D, the application processor, and the like.

The audio module 170 is configured to convert digital audio information into an analog audio signal for output, and is further configured to convert an analog audio input into a digital audio signal. The audio module 170 may be further configured to encode and decode audio signals. In some embodiments, the audio module 170 may be disposed in the processor 110, or some of the functional modules of the audio module 170 may be disposed in the processor 110.

The speaker 170A, also referred to as a "horn", is configured to convert an audio electrical signal into a sound signal. The electronic device 100 can listen to music by using the speaker 170A, or listen to a hands-free call.

The receiver 170B, also referred to as an "earpiece", is configured to convert an audio electrical signal into a sound signal. When the electronic device 100 receives a call or voice information, the receiver 170B can be placed close to an ear to receive the voice.

The microphone 170C, also referred to as a "loudspeaker", is configured to convert a sound signal into an electrical signal. When making a call or sending a voice message, the user can make the mouth approach the microphone 170C and emit a sound, so as to input a sound signal to the microphone 170C. The electronic device 100 may be provided with at least one microphone 170C. In some other embodiments, the electronic device 100 may be provided with two microphones 170C, which can implement noise reduction function in addition to collecting sound signals. In some other embodiments, the electronic device 100 may alternatively be provided with three, four, or more microphones 170C to implement sound signal collection, noise reduction, sound source recognition, directional recording, and the like functions.

The headset jack 170D is configured to connect a wired headset. The headset jack 170D may be a USB interface 130, or may be a 3.5 mm open mobile electronic device 100 platform (open mobile terminal platform, OMTP) standard interface, or a cellular telecommunication industry association of the USA (cellular telecommunication industry association of the USA, CTIA) standard interface.

The pressure sensor 180A is configured to sense a pressure signal and can convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates with conductive material. When a force is applied to the pressure sensor 180A, capacitance between electrodes changes. The electronic device 100 determines intensity of the pressure based on the change in capacitance. When a touch operation is applied to the display 194, the electronic device 100 detects intensity of the touch operation based on the pressure sensor 180A. The electronic device 100 can further calculate a touch position based on the detection signal of the pressure sensor 180A. In some embodiments, touch operations that are applied to the same touch position but have different touch operation intensities may be corresponding to different operation instructions. For example, when a touch operation whose touch operation intensity is less than a first pressure threshold is applied to a short message application icon, an instruction for viewing a short message is executed. When a touch operation whose touch operation intensity is greater than or equal to the first pressure threshold is applied to the short message application icon, an instruction for creating a short message is executed.

The gyro sensor 180B may be configured to determine a movement posture of the electronic device 100. In some embodiments, the gyro sensor 180B may be configured to determine angular velocities of the electronic device 100 around three axes (that is, x, y, and z axes). The gyro sensor 180B can be used for image stabilization. For example, when the shutter is pressed, the gyro sensor 180B detects a shake angle of the electronic device 100, calculates a distance that a lens module needs to compensate based on the angle, and allows the lens to counteract the shake of the electronic device 100 through reverse movement to implement image stabilization. The gyro sensor 180B can further be used in navigation and somatosensory gaming scenarios.

The barometric pressure sensor 180C is configured to measure barometric pressure. In some embodiments, the electronic device 100 calculates the altitude by using a barometric pressure value measured by the barometric pressure sensor 180C, to assist in positioning and navigation.

The magnetic sensor 180D includes a Hall sensor. The electronic device 100 can use the magnetic sensor 180D to detect the opening and closing of a flip holster. In some embodiments, when the electronic device 100 is a flip phone, the electronic device 100 can detect the opening and closing of a flip based on the magnetic sensor 180D, so as to set features such as automatic unlocking of the flip based on the detected opening and closing state of the holster or the opening and closing state of the flip.

The acceleration sensor 180E can detect magnitudes of acceleration of the electronic device 100 in various directions (generally three axes). When the electronic device 100 is still, a value and a direction of gravity may be detected. The acceleration sensor 180E may be further configured to identify the posture of the electronic device 100, and be used in applications such as switching between a landscape screen and a portrait screen, and a pedometer.

The distance sensor 180F is configured to measure a distance. The electronic device 100 can measure the distance by using infrared or laser. In some embodiments, in a photographing scenario, the electronic device 100 can use the distance sensor 180F to measure a distance to implement quick focusing.

The optical proximity sensor 180G may include, for example, a light-emitting diode (LED) and an optical detector such as a photodiode. The light-emitting diode may be an infrared light-emitting diode. The electronic device 100 emits infrared light outward by using the light-emitting diode. The electronic device 100 uses the photodiode to detect infrared reflected light from a nearby object. When sufficient reflected light is detected, it can be determined that there is an object near the electronic device 100. When insufficient reflected light is detected, the electronic device 100 can determine that there is no object near the electronic device 100. The electronic device 100 can use the optical proximity sensor 180G to detect that the user holds the electronic device 100 close to the ear, so as to automatically turn off the screen to save power. The optical proximity sensor 180G may alternatively be used in a holster mode or a pocket mode to automatically unlock or lock the screen.

The ambient light sensor 180L is configured to sense brightness of ambient light. The electronic device 100 can adaptively adjust brightness of the display 194 based on the sensed brightness of the ambient light. The ambient light sensor 180L may be further configured to automatically adjust white balance during photographing. The ambient light sensor 180L can further cooperate with the optical proximity sensor 180G to detect whether the electronic device 100 is in a pocket, so as to prevent accidental touch.

The fingerprint sensor 180H is configured to collect a fingerprint. The electronic device 100 can use the collected fingerprint characteristics to implement fingerprint-based unlocking, application lock accessing, fingerprint-based photographing, fingerprint-based incoming call receiving, and the like.

The temperature sensor 180J is configured to detect a temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor located near the temperature sensor 180J, so as to reduce power consumption and implement thermal protection. In some other embodiments, when the temperature is lower than another threshold, the electronic device 100 heats the battery 142 to avoid abnormal shutdown of the electronic device 100 caused by low temperature. In some other embodiments, when the temperature is lower than still another threshold, the electronic device 100 boosts an output voltage of the battery 142 to avoid abnormal shutdown caused by low temperature.

The touch sensor 180K is also referred to as a "touch device". The touch sensor 180K may be disposed on the display 194, and the touch sensor 180K and the display 194 form a touchscreen, which is also referred to as a "touch-controlled screen". The touch sensor 180K is configured to detect a touch operation performed on or near the touch sensor 180K. The touch sensor can transmit a detected touch operation to the application processor to determine a type of a touch event. The display 194 may be configured to provide a visual output related to the touch operation. In some other embodiments, the touch sensor 180K may alternatively be disposed on a surface of the electronic device 100, which is different from the position of the display 194.

The bone conduction sensor 180M can obtain a vibration signal. In some embodiments, the bone conduction sensor 180M can obtain a vibration signal obtained from bone mass vibration by a human voice part. The bone conduction sensor 180M can be further in contact with the human pulse to receive a blood pressure and pulse signal. In some embodiments, the bone conduction sensor 180M may alternatively be disposed on a headset to be combined into a bone conduction headset. The audio module 170 can obtain a speech signal through parsing based on the vibration signal that is obtained by the bone conduction sensor 180M from bone mass vibration by the voice part, to implement a speech function. The application processor can parse heart rate information based on the blood pressure and pulse signal obtained by the bone conduction sensor 180M, to implement a heart rate detection function.

The key 190 includes a power-on key, a volume key, or the like. The key 190 may be a mechanical key, or may be a touch key. The electronic device 100 can receive a key input, and generate a key signal input related to user setting and function control of the electronic device 100.

The motor 191 can generate a vibration prompt. The motor 191 may be configured to provide an incoming call vibration prompt, or may be configured to provide a touch vibration feedback. For example, touch operations that act on different applications (such as photographing and audio playback) may be corresponding to different vibration feedback effects. In response to touch operations that act on different areas of the display 194, the motor 191 may also be corresponding to different vibration feedback effects. Different application scenarios (such as time reminding, information receiving, alarm clock and games) can also correspond to different vibration feedback effects. Touch vibration feedback effects can also support customization.

The indicator 192 may be an indicator light, which may be configured to indicate a charging state and a power change, or to indicate a message, a missed call, a notification, or the like.

The SIM card interface 195 is configured to connect to a SIM card. The SIM card may be inserted into the SIM card interface 195 or removed from the SIM card interface 195 to implement contact and separation from the electronic device 100. The electronic device 100 can support 1 or N SIM card interfaces, where N is a positive integer greater than 1. The SIM card interface 195 can support the Nano SIM card, the Micro SIM card, the SIM card, and the like. The same SIM card interface 195 allows a plurality of cards to be inserted simultaneously. The plurality of cards may be of the same type or different types. The SIM card interface 195 can also be compatible with different types of SIM cards. The SIM card interface 195 can also be compatible with an external memory card. The electronic device 100 interacts with the network by using the SIM card to implement functions such as call and data communication. In some embodiments, the electronic device 100 uses an eSIM, that is, an embedded SIM card. The eSIM card can be embedded in the electronic device 100 and cannot be separated from the electronic device 100.

This embodiment further provides a computer storage medium, where the computer storage medium stores a computer instruction, and when the computer instruction is run on the electronic device 100, the electronic device 100 is enabled to perform the foregoing related method steps, so as to implement the method for avoiding missing a call in the foregoing embodiment.

This embodiment further provides a computer program product, where when the computer program product runs on a computer, the computer is enabled to perform the foregoing related steps, so as to implement the method for avoiding missing a call in the foregoing embodiment.

In addition, an embodiment of this application further provides an apparatus, where the apparatus may be specifically a chip, a component, or a module, and the apparatus may include a connected processor and memory; the memory is configured to store a computer execution instruction, and when the apparatus runs, the processor may execute the computer execution instruction stored in the memory, so that the chip performs the method for avoiding missing a call in the foregoing method embodiment.

The electronic device 100, computer storage medium, and computer program product or chip provided in the embodiments are all configured to perform the corresponding method provided above. Therefore, for beneficial effects that can be achieved, reference may be made to the beneficial effects in the corresponding method, and details are not described herein again.

The foregoing descriptions about implementations allow a person skilled in the art to clearly understand that, for the purpose of convenient and brief description, division of the foregoing functional modules is used only as an example for illustration. In actual application, the foregoing functions can be allocated to different functional modules and implemented according to needs, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed in a plurality of different positions. Some or all of the units may be selected based on actual needs to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are only used to describe the technical solutions of this application, but not intended to constitute any limitation. Although this application is described in detail with reference to the foregoing example embodiments, a person of ordinary skill in the art should understand that modifications can be made to the technical solutions of this application without departing from the scope of the appended claims.

## Claims

1. A method for avoiding missing a call, wherein the method is carried out in an auxiliary apparatus (50), and the method comprises:
receiving (S203) a network registration instruction sent by a host apparatus (40), wherein the host apparatus (40) sends the network registration instruction when being connected to a network (30) by using a first SIM card of the host apparatus (40);
registering (S204), in response to the network registration instruction, with the network (30) by using a modem of an idle SIM card slot on the auxiliary apparatus (50), wherein the idle SIM card slot is in one of the following states: no SIM card is inserted, only one SIM card is inserted on a dual-card device, and a SIM card is inserted but the SIM card is in a disabled state;
receiving (S205) second incoming call information that is sent by the network (30) to a second SIM card of the host apparatus (40); and
displaying (S208) an incoming call interface and playing a ringtone in response to the second incoming call information, and sending (S206) the second incoming call information to the host apparatus (40).

2. The method for avoiding missing a call according to claim 1, wherein the method further comprises:
hanging up a call of the second incoming call information in response to a user's operation of hanging up the second incoming call information on the incoming call interface, closing the incoming call interface, generating a call record of the second incoming call information, generating a hang-up instruction, and sending the hang-up instruction to the host apparatus.

3. The method for avoiding missing a call according to claim 1, wherein the method further comprises:
if it is detected that the user does not perform an answer or hang-up operation on the incoming call interface, waiting for the network to hang up; and
sending the call record of the second incoming call information to the host apparatus after the network hangs up.

4. The method for avoiding missing a call according to claim 1, wherein the method further comprises:
if it is detected that the user receives the second incoming call information by using the incoming call interface, generating an interface closing instruction, and sending the interface closing instruction to the host apparatus; and
after the call of the second incoming call information ends, generating a hang-up instruction, and sending the hang-up instruction to the host apparatus.

5. The method for avoiding missing a call according to claim 1, wherein the method further comprises:
if it is detected that the user receives the second incoming call information by using the incoming call interface of the host apparatus, sending a voice of the second incoming call information to the host apparatus.

6. The method for avoiding missing a call according to claim 5, wherein the sending a voice of the second incoming call information to the host apparatus comprises:
sending the voice of the second incoming call information to the host apparatus by using Bluetooth or Wi-Fi.

7. The method for avoiding missing a call according to claim 1, wherein the method further comprises:
after the call of the second incoming call information ends, using the modem in an idle SIM card slot to de-register with the network of an operator, so as to release the modem in an idle SIM card slot and a radio frequency resource.

8. The method for avoiding missing a call according to claim 1, wherein the method further comprises:
sending status information of the auxiliary apparatus to the host apparatus, wherein the status information of the auxiliary apparatus comprises status information of a SIM card of the auxiliary apparatus and a hash value of a login account.

9. The method for avoiding missing a call according to claim 1, wherein the registering, in response to the network registration instruction, with the network by using a modem in an idle SIM card slot on an auxiliary apparatus comprises:
sending, to the host apparatus, a request instruction for obtaining information about a second SIM card of the host apparatus; and
receiving the information about the second SIM card that is sent by the host apparatus in response to the request instruction, wherein the information about the second SIM card comprises at least Public Land Mobile Network, PLMN, information and AAA authentication information; and
registering with the network by using the modem in an idle SIM card slot based on the PLMN information and the AAA authentication information.

10. The method for avoiding missing a call according to claim 1, wherein the method further comprises:
receiving short message information that is sent by the network to the second SIM card, and sending the short message information to the host apparatus.

11. A method for avoiding missing a call, wherein the method is carried out in a host apparatus (40), and the method comprises:
establishing (S201) a call connection between a first SIM card and a network in response to first incoming call information that is sent by the network (30) and that is received by the first SIM card of the host apparatus (40) or in response to outgoing call information that is sent by the first SIM card to the network (30);
sending (S203) a network registration instruction to an auxiliary apparatus (50);
receiving (S206), from the auxiliary apparatus (50), second incoming call information that is sent by the network (30) to a second SIM card of the host apparatus (40); and
displaying (S207) an incoming call interface based on the second incoming call information, wherein the second incoming call information is displayed on the incoming call interface.

12. The method for avoiding missing a call according to claim 11, wherein the method further comprises:
if it is detected that a user receives the second incoming call by using the incoming call interface, hanging up the incoming call of the first SIM card, and receiving a voice of the second incoming call information transmitted by the auxiliary apparatus; and
after the call of the second incoming call information ends, closing the incoming call interface of the second incoming call information, and generating a call record of the second incoming call information.

13. The method for avoiding missing a call according to claim 11, wherein the sending a network registration instruction to an auxiliary apparatus comprises:
obtaining (S202) status information of the auxiliary apparatus, and determining, based on the status information of the auxiliary apparatus, whether the auxiliary apparatus is a target device; and
when it is determined that the auxiliary apparatus is the target device, sending the network registration instruction to the auxiliary apparatus.

14. An electronic device (100), comprising a processor (110) and a memory (121), wherein the processor (110) is coupled to the memory (121);
the memory (121) is configured to store a program instruction and
the processor (110) is configured to read the program instruction stored in the memory (121), so as to implement the method for avoiding missing a call according to any one of claims 1 to 13.

15. A computer readable storage medium, wherein the computer readable storage medium stores a program instruction, and when the program instruction is run on an electronic device (100), the electronic device (100) is enabled to perform the method for avoiding missing a call according to any one of claims 1 to 13.

## Patentansprüche

1. Verfahren zum Verhindern eines Verpassens eines Anrufs, wobei das Verfahren in einer Hilfseinrichtung (50) ausgeführt wird und das Verfahren umfasst:
Empfangen (S203) einer Netzwerkregistrierungsanweisung, die durch eine Hosteinrichtung (40) gesendet wird, wobei die Hosteinrichtung (40) die Netzwerkregistrierungsanweisung sendet, wenn sie durch Verwenden einer ersten SIM-Karte der Hosteinrichtung (40) mit einem Netzwerk (30) verbunden ist;
Registrieren (S204), als Reaktion auf die Netzwerkregistrierungsanweisung, mit dem Netzwerk (30) durch Verwenden eines Modems eines freien SIM-Kartensteckplatzes an der Hilfseinrichtung (50), wobei sich der freie SIM-Kartensteckplatz in einem der folgenden Zustände befindet:
keine SIM-Karte ist eingelegt, nur eine SIM-Karte ist in einer Vorrichtung für zwei Karten eingelegt, und eine SIM-Karte ist eingelegt, aber die SIM-Karte ist in einem deaktivierten Zustand;
Empfangen (S205) von Informationen eines zweiten eingehenden Anrufs, die durch das Netzwerk (30) an eine zweite SIM-Karte der Hosteinrichtung (40) gesendet werden; und
Anzeigen (S208) einer Schnittstelle für eingehende Anrufe und Abspielen eines Klingeltons als Reaktion auf die Informationen des zweiten eingehenden Anrufs und Senden (S206) der Informationen des zweiten eingehenden Anrufs an die Hosteinrichtung (40).

2. Verfahren zum Verhindern des Verpassens eines Anrufs nach Anspruch 1, wobei das Verfahren ferner umfasst:
Auflegen eines Anrufs der Informationen des zweiten eingehenden Anrufs als Reaktion auf einen Vorgang eines Benutzers des Auflegens der Informationen des zweiten eingehenden Anrufs auf der Schnittstelle für eingehende Anrufe, Schließen der Schnittstelle für eingehende Anrufe, Generieren eines Anrufdatensatzes der Informationen des zweiten eingehenden Anrufs, Generieren einer Auflegeanweisung und Senden der Auflegeanweisung an die Hosteinrichtung.

3. Verfahren zum Verhindern des Verpassens eines Anrufs nach Anspruch 1, wobei das Verfahren ferner umfasst:
falls erkannt wird, dass der Benutzer auf der Schnittstelle für eingehende Anrufe keinen Antwort- oder Auflegevorgang durchführt, Warten, dass das Netzwerk auflegt; und
Senden des Anrufdatensatzes der Informationen des zweiten eingehenden Anrufs an die Hosteinrichtung, nachdem das Netzwerk auflegt.

4. Verfahren zum Verhindern des Verpassens eines Anrufs nach Anspruch 1, wobei das Verfahren ferner umfasst:
falls erkannt wird, dass der Benutzer die Informationen des zweiten eingehenden Anrufs durch Verwenden der Schnittstelle für eingehende Anrufe empfängt, Generieren einer Anweisung zum Schließen der Schnittstelle und Senden der Anweisung zum Schließen der Schnittstelle an die Hosteinrichtung; und
nachdem der Anruf der Informationen des zweiten eingehenden Anrufs endet, Generieren einer Auflegeanweisung und Senden der Auflegeanweisung an die Hosteinrichtung.

5. Verfahren zum Verhindern des Verpassens eines Anrufs nach Anspruch 1, wobei das Verfahren ferner umfasst:
falls erkannt wird, dass der Benutzer die Informationen des zweiten eingehenden Anrufs durch Verwenden der Schnittstelle für eingehende Anrufe der Hosteinrichtung empfängt, Senden einer Stimme der Informationen des zweiten eingehenden Anrufs an die Hosteinrichtung.

6. Verfahren zum Verhindern des Verpassens eines Anrufs nach Anspruch 5, wobei das Senden einer Stimme der Informationen des zweiten eingehenden Anrufs an die Hosteinrichtung umfasst:
Senden der Stimme der Informationen des zweiten eingehenden Anrufs durch Verwenden von Bluetooth oder WLAN an die Hosteinrichtung.

7. Verfahren zum Verhindern des Verpassens eines Anrufs nach Anspruch 1, wobei das Verfahren ferner umfasst:
nachdem der Anruf der Informationen des zweiten eingehenden Anrufs endet, Verwenden des Modems in einem freien SIM-Kartensteckplatz, um sich von dem Netzwerk eines Betreibers zu deregistrieren, um das Modem in einem freien SIM-Kartensteckplatz und eine Funkfrequenzressource freizugeben.

8. Verfahren zum Verhindern des Verpassens eines Anrufs nach Anspruch 1, wobei das Verfahren ferner umfasst:
Senden von Statusinformationen der Hilfseinrichtung an die Hosteinrichtung, wobei die Statusinformationen der Hilfseinrichtung Statusinformationen einer SIM-Karte der Hilfseinrichtung und einen Hash-Wert eines Anmeldekontos umfassen.

9. Verfahren zum Verhindern des Verpassens eines Anrufs nach Anspruch 1, wobei das Registrieren, als Reaktion auf die Netzwerkregistrierungsanweisung, mit dem Netzwerk durch Verwenden eines Modems in einem freien SIM-Kartensteckplatz an einer Hilfseinrichtung umfasst:
Senden, an die Hosteinrichtung, einer Anforderungsanweisung zum Erhalten von Informationen über eine zweite SIM-Karte der Hosteinrichtung; und
Empfangen der Informationen über die zweite SIM-Karte, die durch die Hosteinrichtung als Reaktion auf die Anforderungsanweisung gesendet werden, wobei die Informationen über die zweite SIM-Karte mindestens Informationen eines öffentlichen landgestützten Mobilfunknetzwerks, PLMN-Informationen, und AAA-Authentifizierungsinformationen umfassen; und
Registrieren mit dem Netzwerk durch Verwenden des Modems in einem freien SIM-Kartensteckplatz basierend auf den PLMN-Informationen und den AAA-Authentifizierungsinformationen.

10. Verfahren zum Verhindern des Verpassens eines Anrufs nach Anspruch 1, wobei das Verfahren ferner umfasst:
Empfangen von Kurznachrichteninformationen, die durch das Netzwerk an die zweite SIM-Karte gesendet werden, und Senden der Kurznachrichteninformationen an die Hosteinrichtung.

11. Verfahren zum Verhindern des Verpassens eines Anrufs, wobei das Verfahren in einem Hostgerät (40) ausgeführt wird und das Verfahren umfasst:
Herstellen (S201) einer Anrufverbindung zwischen einer ersten SIM-Karte und einem Netzwerk als Reaktion auf Informationen eines ersten eingehenden Anrufs, die durch das Netzwerk (30) gesendet werden und durch die erste SIM-Karte der Hosteinrichtung (40) empfangen werden, oder als Reaktion auf Informationen eines ausgehenden Anrufs, die durch die erste SIM-Karte an das Netzwerk (30) gesendet werden;
Senden (S203) einer Netzwerkregistrierungsanweisung an eine Hilfseinrichtung (50);
Empfangen (S206), von der Hilfseinrichtung (50), von Informationen des zweiten eingehenden Anrufs, die durch das Netzwerk (30) an eine zweite SIM-Karte der Hosteinrichtung (40) gesendet werden; und
Anzeigen (S207) einer Schnittstelle für eingehende Anrufe basierend auf den Informationen des zweiten eingehenden Anrufs, wobei die Informationen des zweiten eingehenden Anrufs auf der Schnittstelle für eingehende Anrufe angezeigt werden.

12. Verfahren zum Verhindern des Verpassens eines Anrufs nach Anspruch 11, wobei das Verfahren ferner umfasst:
falls erkannt wird, dass ein Benutzer den zweiten eingehenden Anruf durch Verwenden der Schnittstelle für eingehende Anrufe empfängt, Auflegen des eingehenden Anrufs der ersten SIM-Karte und Empfangen einer Stimme der Informationen des zweiten eingehenden Anrufs, die durch die Hilfseinrichtung übertragen wird; und
nachdem der Anruf der Informationen des zweiten eingehenden Anrufs endet, Schließen der Schnittstelle für eingehende Anrufe der Informationen des zweiten eingehenden Anrufs und Generieren eines Anrufdatensatzes der Informationen des zweiten eingehenden Anrufs.

13. Verfahren zum Verhindern des Verpassens eines Anrufs nach Anspruch 11, wobei das Senden einer Netzwerkregistrierungsanweisung an eine Hilfseinrichtung umfasst:
Erhalten (S202) von Statusinformationen der Hilfseinrichtung und Bestimmen, basierend auf den Statusinformationen der Hilfseinrichtung, ob die Hilfseinrichtung eine Zielvorrichtung ist; und
wenn bestimmt wird, dass die Hilfseinrichtung die Zielvorrichtung ist, Senden der Netzwerkregistrierungsanweisung an die Hilfseinrichtung.

14. Elektronische Vorrichtung (100), umfassend einen Prozessor (110) und einen Speicher (121), wobei der Prozessor (110) mit dem Speicher (121) gekoppelt ist;
der Speicher (121) konfiguriert ist, um eine Programmanweisung zu speichern, und
der Prozessor (110) konfiguriert ist, um die Programmanweisung, die in dem Speicher (121) gespeichert ist, zu lesen, um das Verfahren zum Verhindern des Verpassens eines Anrufs nach einem der Ansprüche 1 bis 13 zu implementieren.

15. Computerlesbares Speicherungsmedium, wobei das computerlesbare Speicherungsmedium eine Programmanweisung speichert und, wenn die Programmanweisung auf einer elektronischen Vorrichtung (100) ausgeführt wird, die elektronische Vorrichtung (100) aktiviert wird, um das Verfahren zum Verhindern des Verpassens eines Anrufs nach einem der Ansprüche 1 bis 13 durchzuführen.

## Revendications

1. Procédé permettant d'éviter de manquer un appel, dans lequel le procédé est mis en œuvre dans un appareil auxiliaire (50), et le procédé comprend :
la réception (S203) d'une instruction d'enregistrement de réseau envoyée par un appareil hôte (40), dans lequel l'appareil hôte (40) envoie l'instruction d'enregistrement de réseau lorsqu'il est connecté à un réseau (30) en utilisant une première carte SIM de l'appareil hôte (40) ;
l'enregistrement (S204), en réponse à l'instruction d'enregistrement de réseau, auprès du réseau (30) en utilisant un modem d'un emplacement de carte SIM inactif sur l'appareil auxiliaire (50), dans lequel l'emplacement de carte SIM inactif est dans l'un des états suivants : aucune carte SIM n'est insérée, une seule carte SIM est insérée sur un dispositif à deux cartes, et une carte SIM est insérée mais la carte SIM est dans un état désactivé ;
la réception (S205) d'une information de second appel entrant qui est envoyée par le réseau (30) à une seconde carte SIM de l'appareil hôte (40) ; et
l'affichage (S208) d'une interface d'appel entrant et la diffusion d'une sonnerie en réponse à l'information de second appel entrant, et l'envoi (S206) de l'information de second appel entrant à l'appareil hôte (40).

2. Procédé permettant d'éviter de manquer un appel selon la revendication 1, dans lequel le procédé comprend en outre :
le raccrochage d'un appel de l'information de second appel entrant en réponse à une opération de l'utilisateur consistant à raccrocher l'information de second appel entrant sur l'interface d'appel entrant, la fermeture de l'interface d'appel entrant, la génération d'un enregistrement d'appel de l'information de second appel entrant, la génération d'une instruction de raccrochage, et l'envoi de l'instruction de raccrochage à l'appareil hôte.

3. Procédé permettant d'éviter de manquer un appel selon la revendication 1, dans lequel le procédé comprend en outre :
s'il est détecté que l'utilisateur n'effectue pas une opération de réponse ou de raccrochage sur l'interface d'appel entrant, l'attente que le réseau raccroche ; et
l'envoi de l'enregistrement de l'appel de l'information de second appel entrant à l'appareil hôte après que le réseau a raccroché.

4. Procédé permettant d'éviter de manquer un appel selon la revendication 1, dans lequel le procédé comprend en outre :
s'il est détecté que l'utilisateur reçoit l'information de second appel entrant en utilisant l'interface d'appel entrant, la génération d'une instruction de fermeture d'interface, et l'envoi de l'instruction de fermeture d'interface à l'appareil hôte ; et
après la fin de l'appel de l'information de second appel entrant, la génération d'une instruction de raccrochage, et l'envoi d l'instruction de raccrochage à l'appareil hôte.

5. Procédé permettant d'éviter de manquer un appel selon la revendication 1, dans lequel le procédé comprend en outre :
s'il est détecté que l'utilisateur reçoit l'information de second appel entrant en utilisant l'interface d'appel entrant de l'appareil hôte, l'envoi d'une voix de l'information de second appel entrant à l'appareil hôte.

6. Procédé permettant d'éviter de manquer un appel selon la revendication 5, dans lequel l'envoi d'une voix de l'information de second appel entrant à l'appareil hôte comprend :
l'envoi de la voix de l'information de second appel entrant à l'appareil hôte en utilisant Bluetooth ou le Wi-Fi.

7. Procédé permettant d'éviter de manquer un appel selon la revendication 1, dans lequel le procédé comprend en outre :
après la fin de l'appel de l'information de second appel entrant, l'utilisation du modem dans un emplacement de carte SIM inactif pour se désinscrire du réseau d'un opérateur, de manière à libérer le modem dans un emplacement de carte SIM inactif et une ressource de radiofréquence.

8. Procédé permettant d'éviter de manquer un appel selon la revendication 1, dans lequel le procédé comprend en outre :
l'envoi des informations sur l'état de l'appareil auxiliaire à l'appareil hôte, dans lequel les informations sur l'état de l'appareil auxiliaire comprennent des informations sur l'état d'une carte SIM de l'appareil auxiliaire et une valeur de hachage d'un compte de connexion.

9. Procédé permettant d'éviter de manquer un appel selon la revendication 1, dans lequel l'enregistrement, en réponse à l'instruction d'enregistrement de réseau, auprès du réseau en utilisant un modem dans un emplacement de carte SIM inactif sur un appareil auxiliaire comprend :
l'envoi, à l'appareil hôte, d'une instruction de demande pour obtenir des informations sur une seconde carte SIM de l'appareil hôte ; et
la réception des informations sur la seconde carte SIM qui sont envoyées par l'appareil hôte en réponse à l'instruction de demande, dans lequel les informations sur la seconde carte SIM comprennent au moins des informations sur le réseau mobile terrestre public, RMTP, et des informations sur l'authentification AAA ; et
l'enregistrement auprès du réseau en utilisant le modem dans un emplacement de carte SIM inactif sur la base des informations RMTP et des informations d'authentification AAA.

10. Procédé permettant d'éviter de manquer un appel selon la revendication 1, dans lequel le procédé comprend en outre :
la réception des informations sur les messages courts qui sont envoyées par le réseau à la seconde carte SIM, et l'envoi des informations sur les messages courts à l'appareil hôte.

11. Procédé permettant d'éviter de manquer un appel, dans lequel le procédé est mis en œuvre dans un appareil hôte (40), et le procédé comprend :
l'établissement (S201) d'une connexion d'appel entre une première carte SIM et un réseau en réponse à une information de premier appel entrant qui est envoyée par le réseau (30) et qui est reçue par la première carte SIM de l'appareil hôte (40) ou en réponse à une information d'appel sortant qui est envoyée par la première carte SIM au réseau (30) ;
l'envoi (S203) d'une instruction d'enregistrement de réseau à un appareil auxiliaire (50) ;
la réception (S206), à partir de l'appareil auxiliaire (50), d'une information de second appel entrant qui est envoyée par le réseau (30) à une seconde carte SIM de l'appareil hôte (40) ; et
l'affichage (S207) d'une interface d'appel entrant sur la base de l'information de second appel entrant, dans lequel l'information de second appel entrant est affichée sur l'interface d'appel entrant.

12. Procédé permettant d'éviter de manquer un appel selon la revendication 11, dans lequel le procédé comprend en outre :
s'il est détecté qu'un utilisateur reçoit le second appel entrant en utilisant l'interface d'appel entrant, le raccrochage de l'appel entrant de la première carte SIM, et la réception d'une voix de l'information de second appel entrant transmise par l'appareil auxiliaire ; et
après la fin de l'appel de l'information de second appel entrant, la fermeture de l'interface d'appel entrant de l'information de second appel entrant, et la génération d'un enregistrement d'appel de l'information de second appel entrant.

13. Procédé permettant d'éviter de manquer un appel selon la revendication 11, dans lequel l'envoi d'une instruction d'enregistrement de réseau à un appareil auxiliaire comprend :
l'obtention (S202) des informations sur l'état de l'appareil auxiliaire, et la détermination, sur la base des informations sur l'état de l'appareil auxiliaire, si l'appareil auxiliaire est un dispositif cible ; et
lorsqu'il est déterminé que l'appareil auxiliaire est le dispositif cible, l'envoi de l'instruction d'enregistrement de réseau à l'appareil auxiliaire.

14. Dispositif électronique (100), comprenant un processeur (110) et une mémoire (121), dans lequel le processeur (110) est couplé à la mémoire (121) ;
la mémoire (121) est configurée pour stocker une instruction de programme et
le processeur (110) est configuré pour lire l'instruction de programme stockée dans la mémoire (121), de manière à mettre en œuvre le procédé permettant d'éviter de manquer un appel selon l'une quelconque des revendications 1 à 13.

15. Support de stockage lisible par ordinateur, dans lequel le support de stockage lisible par ordinateur stocke une instruction de programme, et lorsque l'instruction de programme est exécutée sur un dispositif électronique (100), le dispositif électronique (100) est activé pour exécuter le procédé permettant d'éviter de manquer un appel selon l'une quelconque des revendications 1 à 13.
